(19) Europäisches Patentamt
European Patent Office
Office européen des brevets

(11) **EP 3 864 426 B1**

(12) **EUROPÄISCHE PATENTSCHRIFT**

(45) Veröffentlichungstag und Bekanntmachung des Hinweises auf die Patenterteilung:
**25.06.2025  Patentblatt 2025/26**

(21) Anmeldenummer: **19779496.9**

(22) Anmeldetag: **03.10.2019**

(51) Internationale Patentklassifikation (IPC):
***G01S 5/02*** (2010.01)

(52) Gemeinsame Patentklassifikation (CPC):
**G01S 5/02521**

(86) Internationale Anmeldenummer:
**PCT/EP2019/076817**

(87) Internationale Veröffentlichungsnummer:
**WO 2020/074360 (16.04.2020 Gazette 2020/16)**

(54) **SYSTEM UND VERFAHREN ZUR POSITIONSBESTIMMUNG IN EINEM GEBÄUDE**

SYSTEM AND METHOD FOR DETERMINING POSITIONS WITHIN A BUILDING

SYSTÈME ET PROCÉDÉ DE DÉTERMINATION DE LA POSITION DANS UN BÂTIMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **12.10.2018  EP 18200011**

(43) Veröffentlichungstag der Anmeldung:
**18.08.2021  Patentblatt 2021/33**

(73) Patentinhaber: **INVENTIO AG**
**6052 Hergiswil (CH)**

(72) Erfinder:
• **TROESCH, Florian**
  **8703 Erlenbach (CH)**
• **WITTNEBEN, Armin**
  **8044 Zürich (CH)**
• **DUMPHART, Gregor**
  **8044 Zürich (CH)**
• **KUHN, Marc**
  **8044 Gockhausen (CH)**

(74) Vertreter: **Inventio AG**
**Seestrasse 55**
**6052 Hergiswil (CH)**

(56) Entgegenhaltungen:
**WO-A1-2016/048370      WO-A1-2018/183571**
**US-A1- 2010 309 051**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die hier beschriebene Technologie betrifft allgemein ein Gebäudesystem. Ausführungsbeispiele der Technologie betreffen insbesondere ein Gebäudesystem, mit dem eine Position eines Nutzers in einem Gebäude bestimmbar ist, und ein Verfahren zum Betreiben eines solchen Systems.

Gebäudesysteme können auf verschiedenste Art und Weise für unterschiedlichste Anwendungen ausgestaltet sein. In einem Gebäude kann beispielsweise ein Interesse bestehen, eine Position eines Nutzers zu bestimmen. Dieses Interesse kann auf Seiten des Nutzers bestehen, der sich im Gebäude orientieren möchte. Das Interesse kann auch auf Seiten eines Gebäudemanagements bestehen, das wissen möchte, ob und wo sich ein Nutzer im Gebäude aufhält. Zur Bestimmung einer Position und zur Navigation kann allgemein das bekannte Globale Positionsbestimmungssystem (Global Positioning System (GPS)) zur Anwendung kommen. In Gebäuden ist der GPS-Empfang jedoch reduziert bis unmöglich. Für Gebäude sind daher Gebäudesysteme mit alternativen Ansätzen zur Positionsbestimmung bekannt. Beispielsweise offenbart DE 10 2013 201873 A1 ein Indoor-Positionsbestimmungssystem, das die RFID-Technologie oder die NFC (Near Field Communication) Technologie nutzt, um im Gebäude Funkzellen zu schaffen.

Das Interesse des Gebäudemanagements, zu wissen, ob und wo sich ein Nutzer im Gebäude aufhält, besteht auch im Zusammenhang mit einem Zugangskontrollsystem, das ebenfalls ein Beispiel für ein Gebäudesystem ist. Das Zugangskontrollsystem kontrolliert beispielsweise einen Zugang zu einer zugangsbeschränkten Zone (z. B. einzelne Räume oder Stockwerke, oder Stockwerkflure mit Zugang zu Aufzügen). In einem solchen Zugangskontrollsystem können sich Nutzer (Personen) auf unterschiedliche Art und Weise als zugangsberechtigt ausweisen, z. B. mit einem Schlüssel, einer Magnet-, Chip- oder RFID Karte oder einem mobilen elektronischen Gerät (z. B. Mobiltelefon). WO 2010/112586 A1 beschreibt ein Zugangskontrollsystem, bei dem ein von einem Nutzer mitgeführtes Mobiltelefon einen Identifikationscode an einen Zugangsknoten sendet. Falls der Identifikationscode als gültig erkannt wird, sendet der Zugangsknoten einen Zugangscode an das Mobiltelefon, das den Zugangscode auf einer Anzeige dargestellt.

Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt.

WO 2018/183571 A1 beschreibt in Verbindung mit Mehrwegeausbreitung von Funksignalen ein Verfahren, bei dem von einem bekannten RFID Tag ein Funkprofil als Funktion von einem Empfangswinkel erfasst wird. Von unbekannten RFID Tag wird ebenfalls ein Funkprofil als Funktion von einem Empfangswinkel erfasst, das mit dem Funkprofil des bekannten Tags verglichen wird. Dadurch kann die Position des unbekannten RFID Tags bestimmt werden.

US 2010/309051 A1 betrifft ebenfalls die Mehrwegeausbreitung von Funksignalen. Funksignale werden verwendet, um die Position einer Funkeinrichtung sowohl in Innenals auch in Außenumgebungen zu berechnen. Zunächst scannt ein sich bewegender Scanner (z. B. ein mit Funkgeräten ausgestattetes Fahrzeug) einen geografischen Bereich von Interesse und empfängt Funkwellen von verschiedenen Quellen, die Funkwellen in verschiedenen Standards übertragen. Die empfangenen Signale werden verarbeitet, um sie und die Übertragungskanäle an jeder Position des Fahrzeugs zu charakterisieren.

WO2016/048370 A1 beschreibt ein System zum Bestimmen des Standorts eines Mobilgeräts. Das System umfasst ein verteiltes Antennensystem, wobei Signale, die zwischen den entfernten Antenneneinheiten und einer zentralen Einheit weitergeleitet werden, verzögert werden, so dass unterschiedliche Signalpfade zwischen den entfernten Antenneneinheiten und der zentralen Einheit unterschiedliche Verzögerungszeiten haben. Das System ermittelt den Standort des Mobilgeräts unter Verwendung der Verzögerungszeiten.

In Gebäuden mit vielen Stockwerken kann es zu bestimmten Tageszeiten zu einem hohen Personenverkehrsaufkommen kommen, beispielsweise in einer Eingangshalle eines Bürogebäudes, wenn morgens oder nach einer Mittagspause eine Vielzahl von Arbeitnehmern das Gebäude betritt und sich in der Eingangshalle aufhält, um von dort aus zu ihren Arbeitsplätzen zu gelangen. Zu diesen Zeiten werden nicht nur hohe Anforderungen an die Effizienz eines im Gebäude installierten Aufzugssystems gestellt, sondern allgemein auch andere im Gebäude vorhandene Gebäudesysteme, um z. B. lange Wartezeiten, Unruhe und Störungen in der Eingangshalle so weit wie möglich zu vermeiden, jedoch ohne Abstriche bei der Sicherheit zu machen. Es besteht daher ein Bedarf an einer Technologie, die diese Anforderungen erfüllt, wobei die Technologie nutzerfreundlich sein soll.

Ein Aspekt einer solchen Technologie betrifft ein Verfahren zum Betreiben eines Gebäudesystems gemäß dem Anspruch 1, wobei das Gebäudesystem eine Steuereinrichtung, Sendeeinrichtungen für primäre Funksignale, insbesondere eine erste Sendeeinrichtung für ein erstes Funksignal, eine zweite Sendeeinrichtung für ein zweites Funksignal, eine dritte Sendeeinrichtung für ein drittes Funksignal, eine Empfangseinrichtung für Funksignale und eine mit der Empfangseinrichtung kommunikativ verbundene Signalverarbeitungseinrichtung umfasst. Im Verfahren werden durch die Signalverarbeitungseinrichtung primäre Kanalimpulsantworten bestimmt, wobei eine erste primäre Kanalimpulsantwort auf dem durch die Empfangseinrichtung empfangenen ersten Funksignal basiert, wobei eine zweite primäre Kanalimpulsantwort auf dem durch die Empfangseinrichtung empfangenen zweiten Funksignal basiert und wobei eine dritte primäre Kanalimpulsantwort auf dem durch die Empfangseinrichtung empfangenen dritten Funksignal basiert. Durch die Signalverarbeitungseinrichtung wird eine sekundäre Kanalimpulsantwort basierend auf einem durch die Empfangseinrichtung empfangen sekundären Funksignal bestimmt, wobei das sekundäre Funksignal von einem ersten mobilen elektronischen Gerät eines ersten Nutzers gesendet wird. Durch die Signalverarbeitungseinrichtung werden zudem Ähnlichkeitsgrade durch Auswerten der Kanalimpulsantworten bestimmt, wobei ein erster Ähnlichkeitsgrad angibt, wie ähnlich die erste primäre Kanalimpulsantwort und die sekundäre Kanalimpulsantwort zueinander sind, wobei ein zweiter Ähnlichkeitsgrad angibt, wie ähnlich die zweite primäre Kanalimpulsantwort und die sekundäre Kanalimpulsantwort zueinander sind und wobei ein dritter Ähnlichkeitsgrad angibt, wie ähnlich die dritte primäre Kanalimpulsantwort und die sekundäre Kanalimpulsantwort zueinander sind. Für jeden Ähnlichkeitsgrad wird durch die Signalverarbeitungseinrichtung eine Distanz des mobilen Geräts zur dem Ähnlichkeitsgrad entsprechenden Sendeeinrichtung, die im Gebäude an festgelegten Orten angeordnet sind, bestimmt. Durch die Signalverarbeitungseinrichtung wird basierend auf den Distanzen eine Position des mobilen Geräts bestimmt.

Ein anderer Aspekt der Technologie betrifft ein System zur Bestimmung einer Position eines Nutzers in einem Gebäude gemäß dem Anspruch 7. Das System umfasst eine Steuereinrichtung, Sendeeinrichtungen für primäre Funksignale, insbesondere eine erste Sendeeinrichtung für ein erstes Funksignal, eine zweite Sendeeinrichtung für ein zweites Funksignal, und eine dritte Sendeeinrichtung für ein drittes Funksignal, eine Empfangseinrichtung für Funksignale und eine Signalverarbeitungseinrichtung, die mit der Empfangseinrichtung kommunikativ verbunden ist. Die Signalverarbeitungseinrichtung bestimmt primäre Kanalimpulsantworten, wobei eine erste primäre Kanalimpulsantwort auf dem durch die Empfangseinrichtung empfangenen ersten Funksignal basiert, wobei eine zweite primäre Kanalimpulsantwort auf dem durch die Empfangseinrichtung empfangenen zweiten Funksignal basiert und wobei eine dritte primäre Kanalimpulsantwort auf dem durch die Empfangseinrichtung empfangenen dritten Funksignal basiert. Die Signalverarbeitungseinrichtung bestimmt auch eine sekundäre Kanalimpulsantwort basierend auf einem durch die Empfangseinrichtung empfangen sekundären Funksignal, das von einem mobilen Gerät eines ersten Nutzers ausgesendet wird. Die Signalverarbeitungseinrichtung bestimmt zudem Ähnlichkeitsgrade durch Auswerten der Kanalimpulsantworten, wobei ein erster Ähnlichkeitsgrad angibt, wie ähnlich die erste primäre Kanalimpulsantwort und die sekundäre Kanalimpulsantwort zueinander sind, wobei ein zweiter Ähnlichkeitsgrad angibt, wie ähnlich die zweite primäre Kanalimpulsantwort und die sekundäre Kanalimpulsantwort zueinander sind und wobei ein dritter Ähnlichkeitsgrad angibt, wie ähnlich die dritte primäre Kanalimpulsantwort und die sekundäre Kanalimpulsantwort zueinander sind. Die Signalverarbeitungseinrichtung bestimmt ausserdem für jeden Ähnlichkeitsgrad eine Distanz des mobilen Geräts zur dem Ähnlichkeitsgrad entsprechenden Sendeeinrichtung, die im Gebäude an festgelegten Orten angeordnet sind. Basierend auf den Distanzen wird eine Position des mobilen Geräts bestimmt.

Die hier beschriebene Technologie schafft ein Gebäudesystem, das aufgrund einer Auswertung der Funksignale nicht nur erkennt, dass sich ein Nutzer im Gebäude aufhält, sondern auch dessen Position im Gebäude bestimmt. Dies erfolgt für den Nutzer auf komfortable Weise, weil der Nutzer beispielsweise nicht mit dem mobilen elektronischen Gerät hantieren muss. Neben einem solchen für einen Nutzer wahrnehmbaren Vorteil, bietet die hier beschriebene Technologie zudem wesentliche technische Vorteile.

In einem Ausführungsbeispiel wird die Position des mobilen Geräts mittels eines Verfahrens für Trilateration bestimmt. Damit kann ein an sich bekanntes Verfahren geringer Komplexität für die Positionsbestimmung genutzt werden.

Die Ähnlichkeitsgrade basieren gemäss der hier beschriebenen Technologie auf einer Auswertung der Kanalimpulsantworten. Aus jeder der primären Kanalimpulsantworten wird eine erste Folge von zeitlich aufeinanderfolgenden ersten Mehrwege-Signalkomponenten ermittelt, und aus der sekundären Kanalimpulsantwort wird eine zweite Folge von zeitlich aufeinanderfolgenden zweiten Mehrwege-Signalkomponenten ermittelt. Die Auswertung der primären und sekundären Kanalimpulsantworten umfasst ein paarweises Vergleichen, gemäss der Reihenfolge in der ersten und zweiten Folge, einer jeden zweiten Mehrwege-Signalkomponente mit ihrer, der Reihenfolge entsprechenden ersten Mehrwege-Signalkomponente, um für jedes Paar eine zeitliche Abweichung zu bestimmen, sodass eine maximale zeitliche Abweichung und eine minimale zeitliche Abweichung vorliegen, wobei der Ähnlichkeitsgrad auf mindestens einer dieser zeitlichen Abweichungen basiert. Die hier beschriebene Technologie nutzt somit gezielt die oft als nachteilig angesehene Mehrwege-Signalausbreitung.

Da die Mehrwege-Signalausbreitung gezielt genutzt wird, ist die hier beschriebene Technologie auch dann einsetzbar, wenn keine Sichtverbindung zur Empfangseinrichtung besteht. Die hier beschriebene Technologie ist daher auch für den Einsatz in Gebäuden geeignet, in denen eine hohe Nutzerdichte vorkommen kann. Eine solche Nutzerdichte kann sich beispielsweise bei hohem Verkehrsaufkommen in einer Eingangshalle eines Bürogebäudes oder Hotels ergeben.

Bei der hier beschriebenen Technologie ist es ausserdem ein Vorteil, dass sie sowohl bei synchronen als auch asynchronen Funksignalen eingesetzt werden kann. In einem Ausführungsbeispiel für eine synchrone Situation haben die primären Funksignale und das sekundäre Funksignal eine gemeinsame Zeitreferenz. Für jeden der Ähnlichkeitsgrade wird die Distanz gemäss

$$d = E_S \cdot c \cdot SD_S,$$

ermittelt, dabei sind: c die Lichtgeschwindigkeit, $E_S = (K + 1)/K$ (Korrekturfaktor) und $SD_S = \max \{ | \Delta_1 | , ..., | \Delta_K | \}$ (Ähnlichkeitsgrad bei synchroner Situation).

In einem Ausführungsbeispiel für eine asynchrone Situation haben die primären Funksignale und das sekundäre Funksignal keine gemeinsame Zeitreferenz. Für jeden der Ähnlichkeitsgrade wird die Distanz gemäss

$$d_1 = E_A \cdot c/2 \cdot SD_A,$$

ermittelt, dabei sind: c die Lichtgeschwindigkeit, $E_A = (K + 1)/(K - 1)$ (Korrekturfaktor) und $SD_A = (\max \{\Delta_1, ..., \Delta_K\} - \min\{\Delta_1, ..., \Delta_K\})$ (Ähnlichkeitsgrad bei asynchroner Situation).

Wie oben erwähnt, ist die hier beschriebene Technologie auch bei mehr als einem Nutzer einsetzbar, beispielsweise bei hohem Verkehrsaufkommen. In einer solchen Situation empfängt die Empfangseinrichtung eine Anzahl von weiteren sekundären Funksignalen, die von einer Anzahl von weiteren mobilen elektronischen Geräten ausgesendet werden. Basierend auf jedem empfangenen weiteren sekundären Funksignal wird eine Kanalimpulsantwort bestimmt, die in Verbindung mit den primären Kanalimpulsantworten ausgewertet wird, um Distanzen des entsprechenden weiteren mobilen elektronischen Geräts zu den Sendeeinrichtungen zu ermitteln. Damit kann auch in Situationen mit mehr als einem Nutzer die Positionen der einzelnen Nutzer erkannt werden.

In einem Ausführungsbeispiel werden die Positionen der weiteren mobilen elektronischen Geräte genutzt, um Abständen zwischen den weiteren Nutzern zu bestimmen. Solche Inter-Nutzer Abstände können genutzt werden, um Ausnahmesituation im Gebäude zu erkennen. Ein solche Ausnahmesituation kann u. U. vorkommen, wenn ein berechtigter oder unberechtigter Nutzer versucht, sich einem Nutzer, der z. B. durch eine Schleuse geht, anzuschliessen, um so in eine zugangsbeschränkte Zone zu gelangen. Die hier beschriebene Technologie kann auch eingesetzt werden, um eine solche Drängler-Situation zu erkennen. Wenn eine solche Situation vorliegt, kann eine Sicherheitsmassnahme veranlasst werden, z. B. ein Auslösen eines Alarms und/oder ein Alarmieren von Sicherheitspersonal. In einer anderen Ausnahmesituation können einige oder alle der anwesenden Nutzer zusammengehören und als solche eine Gruppe bilden. Auch in diesem Fall kann z. B. Sicherheitspersonal alarmiert werden, um die Nutzer dieser Gruppe beispielsweise gemeinsam durch den Zugang zu schleusen, um so die Gruppe zusammenzuhalten und Verzögerungen so gering wie möglich zu halten.

In der hier beschriebenen Technologie können bekannte Standards für Funkkommunikation angewendet werden. In einem Ausführungsbeispiel haben die Funksignale eine Bandbreite von mindestens 500 MHz, die gemäss einem WLAN/WiFi Standard oder einem Standard für eine Ultra-Breitband Technologie gesendet und empfangen werden. Beispiele solcher Standards sind an anderer Stelle dieser Beschreibung angegeben.

In einem Ausführungsbeispiel wird zur Ermittlung der Gebäudeaktion eine erste Kennung genutzt. Wenn der erste Nutzer zugangsberechtigt ist, ist die erste Kennung einem Nutzerprofil zugeordnet, in dem eine nutzerspezifische Gebäudeaktion gespeichert ist. Die erste Kennung wird in Verbindung mit dem sekundären Funksignal ermittelt. Die Gebäudeaktion kann beispielsweise darin bestehen, für den Nutzer einen Aufzugsruf (Zielruf) zu veranlassen oder Türen oder andere Barrieren freizugeben, an denen dieser Nutzer zugangsberechtigt ist.

Ein weiterer Vorteil der hier beschriebenen Technologie ist, dass die Auswertung der empfangenen primären und sekundären Funksignale in der Signalverarbeitungseinrichtung erfolgt, die z. B. als zentrale Einrichtung die Funksignalauswertung für das gesamte Gebäude vornimmt, während die Sendeeinrichtungen einen eingeschränkten Funktionsumfang mit geringer Komplexität haben; in einem Ausführungsbeispiel ist der Funktionsumfang auf ein periodisches Senden einer breitbandigen Trainingssequenz, evtl. in Verbindung mit einer Kennung, beschränkt. Die Sendeeinrichtungen sind daher relativ kostengünstig. Sollen in einer Zone zusätzliche Sendeeinrichtungen angeordnet werden, um z. B. die Genauigkeit der Distanzbestimmung zu verbessern, kann dies ebenfalls relativ kostengünstig erfolgen.

Es ist ausserdem ein Vorteil, dass die hier beschriebene Technologie in Verbindung mit einem Zugangskontrollsystem eingesetzt werden kann. Dadurch kann quasi ein hybrides Gebäudesystem geschaffen werden, das in Verbindung mit einer Positionsbestimmung und/oder einer Zugangskontrolle genutzt werden kann. Die mit der hier beschriebenen Technologie ermittelte Position eines Nutzers kann genutzt werden, um dessen Distanz zum Zugang zu einer zugangsbeschränkten Zone zu bestimmen. Ist diese Distanz kleiner als ein festgelegter Mindestabstand, kann dies bedeuten, dass der Nutzer sich nicht nur in der öffentlichen Zone aufhält, sondern tatsächlich Zugang wünscht. Befinden sich mehrere Nutzer in der öffentlichen Zone und sind deren Positionen bestimmt, kann z. B. derjenige Nutzer erkannt werden, der tatsächlich Zugang wünscht.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:

Fig. 1     eine schematische Darstellung einer beispielhaften Situation in einem Gebäude mit einem Gebäudesystem gemäss einem ersten Ausführungsbeispiel;

Fig. 2     eine schematische Darstellung eines zweiten Ausführungsbeispiels eines Gebäudesystems;

Fig. 3A     eine schematische Darstellung einer Mehrwege-Signalausbreitung zwischen Komponenten, die in der Situation gemäss Fig. 1 auftreten können;

Fig. 3B     eine schematische Darstellung einer beispielhaften ersten Kanalimpulsantwort basierend auf einem ersten Funksignal;

Fig. 3C     eine schematische Darstellung einer beispielhaften zweiten Kanalimpulsantwort basierend auf einem zweiten Funksignal;

Fig. 3D     eine schematische Darstellung der ersten Kanalimpulsantwort mit beispielhaft eingezeichneten Spitzenwerten;

Fig. 3E     eine schematische Darstellung der zweiten Kanalimpulsantwort mit beispielhaft eingezeichneten Spitzenwerten;

Fig. 3F     eine schematische Darstellung einer Überlagerung der in Fig. 3D und 3E gezeigten Kanalimpulsantworten;

Fig. 4     ein Ablaufdiagram eines Ausführungsbeispiels eines Verfahrens zur Bestimmung einer Position eines Nutzers in einem Gebäude,

Fig. 5     ein Ablaufdiagram eines weiteren Ausführungsbeispiels eines Verfahrens zur Positionsbestimmung und

Fig. 6     eine schematische Darstellung eines Ausführungsbeispiels einer Signalverarbeitungseinrichtung des in Fig. 1 und Fig. 2 gezeigten Gebäudesystems.

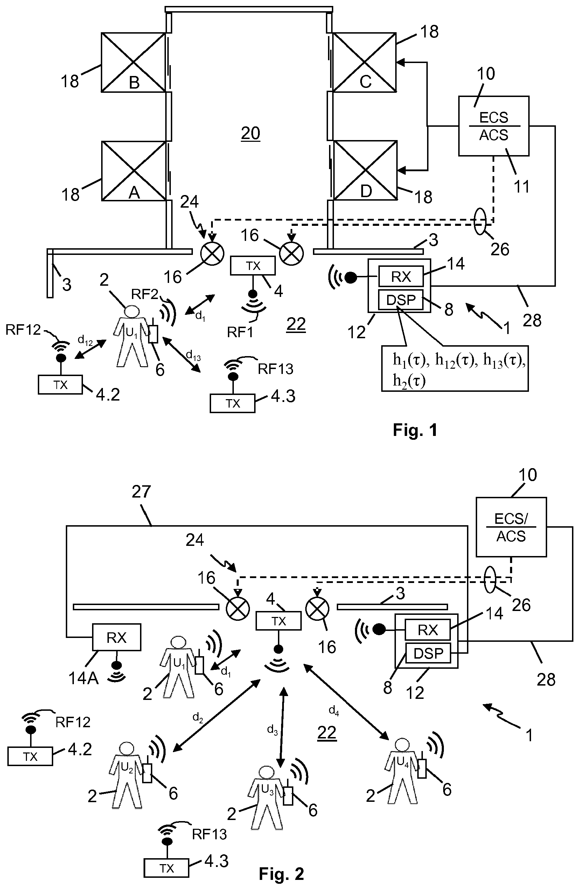

Fig. 1 und Fig. 2 sind schematische Darstellungen von beispielhaften Situationen in einem Gebäude mit einem Gebäudesystem 1. Das Gebäudesystem 1 kann beispielsweise ein System zur Bestimmung einer Position eines Nutzers 2, ein Zugangskontrollsystem, ein Aufzugssystem, oder eine Kombination aus diesen Systemen umfassen. In den in Fig. 1 und Fig. 2 gezeigten Situationen kommt u. a. ein Zugangskontrollsystem zur Anwendung, wobei bei dieser Anwendung auch die Position des Nutzers 2 gemäss der hier beschriebenen Technologie bestimmt werden kann. Das Gebäudesystem 1 ist im Folgenden auch als Zugangskontrollsystem bezeichnet; Ausführungsbeispiele der hier beschriebenen Technologie sind mit Bezug auf ein Zugangskontrollsystem beschrieben. Der Fachmann erkennt, dass die Positionsbestimmung auch in anderen Situationen als den in Fig. 1 und Fig. 2 gezeigten Situationen angewendet werden kann, insbesondere unabhängig von einem Zugangskontrollsystem oder einem Aufzugssystem, beispielsweise kann eine ermittelte Position dem Nutzer 2 zur Orientierung und/oder Wegeleitung mitgeteilt werden.

In Fig. 1 und Fig. 2 sind aus Darstellungsgründen vom Gebäude lediglich einige Wände 3, Räume 18 und Zonen 20, 22 eingezeichnet. Die Räume 18 können z. B. Büros, Wohnungen, Hallen und/oder Aufzugskabinen eines Aufzugsystems sein. In der in Fig. 1 gezeigten Situation befindet sich in der Zone 22 ein Nutzer 2 ($U_1$), der ein mobiles elektronisches Geräte 6 (im Folgenden auch als mobiles Gerät 6 bezeichnet) mit sich führt. Das mobile Gerät 6 sendet ein Funksignal RF2 aus. In der in Fig. 2 gezeigten Situation hält sich eine Vielzahl von Nutzern 2 ($U_1$, $U_2$, $U_3$, $U_4$) in der Zone 22 auf. Die Zone 22 unterliegt in diesen beispielhaften Situationen keiner Zugangsbeschränkung und wird im Folgenden auch als öffentliche Zone 22 bezeichnet. Ein Zugang 24 trennt die öffentliche Zone 22 von der Zone 20, die einer Zugangsbeschränkung unterliegt und an die Räume 18 angrenzt. Die Zone 20 wird im Folgenden auch als zugangsbeschränkte Zone 20 bezeichnet. Unter dem Begriff "Gebäude" sind in dieser Beschreibung beispielsweise Wohn- und/oder Geschäftsgebäude, Sportarenen, Flughäfen, Schiffe zu verstehen.

Das Gebäudesystem 1 umfasst gemäss einem Ausführungsbeispiel mehrere Sendeeinrichtungen 4, 4.2, 4.3 (jeweils als TX dargestellt) für Funksignals RF1, RF12, RF13. Im gezeigten Ausführungsbeispiel umfasst das Gebäudesystem 1 drei Sendeeinrichtungen 4, 4.2, 4.3, es können aber auch mehr als drei Sendeeinrichtungen angeordnet sein. Die Sendeeinrichtungen 4, 4.2, 4.3 sind im Gebäude an festgelegten Positionen angeordnet, sie können z. B. in einem Gebäudeplan festgelegt und dokumentiert sein. Eine solche Dokumentation kann für jede der Sendeeinrichtungen 4, 4.2, 4.3 beispielsweise angeben, auf welchem Stockwerk sie an welcher Position angeordnet ist. Die Position kann z. B. bezogen auf einem gewählten Fixpunkt angegeben werden.

Das Gebäudesystem 1 umfasst gemäss einem Ausführungsbeispiel ausserdem eine Empfangseinrichtung 14 (als RX dargestellt) für Funksignale RF1, RF12, RF13, RF2, eine mit der Empfangseinrichtung 14 verbundene Signalverarbeitungseinrichtung 8 (als DSP dargestellt) und eine Steuerung 11 (als ACS dargestellt). Die Empfangseinrichtung 14 und die Signalverarbeitungseinrichtung 8 können in einer Auswerteeinheit 12 angeordnet sein, die durch eine drahtgebundene und/oder drahtlose Verbindung 28 mit der Steuerung 11 des Gebäudesystems 1 verbunden ist.

In Fig. 2 ist das in Fig. 1 gezeigte Anwendungsbeispiel dadurch modifiziert, dass es eine weitere Empfangseinrichtung 14A umfasst. Die Empfangseinrichtung 14A ist mit der Signalverarbeitungseinrichtung 8 der Auswerteeinheit 12 mittels einer drahtgebundenen und/oder drahtlosen Verbindung 27 verbunden. Die Empfangseinrichtung 14A ist optional, sie kann aber u. U. bei der hier beschriebenen Technologie von Vorteil sein, wie an anderer Stelle dieser Beschreibung ausgeführt. Weitere Komponenten und Funktionalitäten des Gebäudesystems 1 gemäss Fig. 1 und Fig. 2 sind an anderer Stelle dieser Beschreibung genannt.

In den in Fig. 1 und Fig. 2 gezeigten Situationen ist die hier beschriebene Technologie in vorteilhafter Weise anwendbar, um das Gebäudesystem 1 mit möglichst geringer Komplexität zu betreiben. Kurz und beispielhaft zusammengefasst erfolgt der Betrieb des Gebäudesystems 1 gemäss einem Ausführungsbeispiel wie folgt: Die Technologie bestimmt für jede der Sendeeinrichtungen 4, 4.2, 4.3 eine Distanz $d_1$, $d_{12}$, $d_{13}$ (s. Fig. 1) zum Nutzer 2. Da die Positionen der Sendeeinrichtungen 4, 4.2, 4.3 im Gebäude festgelegt und damit bekannt sind, bestimmt die Technologie aus diesen Distanzen $d_1$, $d_{12}$, $d_{13}$ die Position des Nutzers 2, beispielsweise durch ein Verfahren zur Trilateration. Die Technologie wertet dafür Funksignale RF1, RF12, RF13, RF2 aus, die von den Sendeeinrichtungen 4, 4.2, 4.3 und vom mobilen Gerät 6 des Nutzers 2 gesendet werden, um darauf basierend unterscheidbare Kanalimpulsantworten ($h(\tau)$) zu erhalten. Da sich die Quellen dieser Funksignale (d. h. die Sendeeinrichtungen 4, 4.2, 4.3 und das mobile Gerät 6) relativ nah zueinander in der gleichen Umgebung (öffentliche Zone 22) aufhalten, breiten sich die Funksignale auf ähnlichen Wegen aus (z. B. wegen Reflektionen an Wänden 3 und anderen Effekten). Aus diesem Grund gilt, dass je näher sich das mobile Gerät 6 bei einer bestimmten Sendeeinrichtung 4, 4.2, 4.3 befindet, umso ähnlicher sind die diesem Paar (mobiles Gerät 6, bestimmte Sendeeinrichtung 4, 4.2, 4.3) zugeordneten Kanalimpulsantworten ($h(\tau)$). Die hier beschriebene Technologie nutzt dies und bestimmt aus den Kanalimpulsantworten ($h(\tau)$) eines jeden Paars einen Ähnlichkeitsgrad, der angibt, wie ähnlich sich die jeweiligen Kanalimpulsantworten sind. Insgesamt ergeben sich mindestens drei Ähnlichkeitsgrade. Jeder Ähnlichkeitsgrad wird verwendet, um die Distanz $d_1$, $d_{12}$, $d_{13}$ des mobilen Geräts 6 zur betreffenden Sendeeinrichtung 4, 4.2., 4.3 zu bestimmen. Die insgesamt mindestens drei Distanzen $d_1$, $d_{12}$, $d_{13}$ werden dann zur Positionsbestimmung verwendet.

Die Funk-Komponenten des Gebäudesystems 1 (d. h. die Empfangseinrichtungen 14, 14A und die Sendeeinrichtungen 4, 4.2, 4.3) sind in den gezeigten Ausführungsbeispielen in der öffentlichen Zone 22 angeordnet. Die Sendeeinrichtung 4 ist z. B. im Zugang 24 oder in dessen Umgebung angeordnet, während die Sendeeinrichtungen 4.2, 4.3 und die Empfangseinrichtungen 14, 14A davon entfernt an anderen Orten in der öffentlichen Zone 22 angeordnet sind. Der sich dort aufhaltende Nutzer 2 hat in der gezeigten Situation eine Distanz $d_1$ zur Sendeeinrichtung 4, eine Distanz $d_{12}$ zur Sendeeinrichtung 4.2 und eine Distanz $d_{13}$ zur Sendeeinrichtung 4.3. Der Fachmann erkennt, dass jeder weitere in Fig. 2 gezeigte Nutzer 2 ($U_2$, $U_3$, $U_4$) entsprechende Distanzen zu den Sendeeinrichtungen 4, 4.2, 4.3 hat;

zur Illustration sind in Fig. 2 jedoch lediglich Distanzen $d_2$, $d_3$, $d_4$ der weiteren Nutzer 2 ($U_2$, $U_3$, $U_4$) zur Sendeeinrichtung 4 und damit zum Zugang 24 eingezeichnet.

Der Ort der Empfangseinrichtung 14 ist so gewählt, dass sie die von den Sendeeinrichtungen 4, 4.2, 4.3 ausgesendeten Funksignale RF1, RF12, RF13 jeweils in ausreichender Signalstärke empfängt, d. h. ein Funksignal hat am Ort der Empfangseinrichtung 14 eine Signalstärke (beispielsweise ausgedrückt durch einen RSSI-Wert (Received Signal Strength Indicator)), die grösser als ein für einen sicheren Empfang festgelegter Schwellenwert ist. Der Ort der Empfangseinrichtung 14A ist in entsprechender Weise gewählt.

Im Folgenden ist ein Ausführungsbeispiel der hier beschriebenen Technologie mit Bezug auf die in Fig. 1 gezeigte Situation erläutert. In einem Ausführungsbeispiel senden die Sendeeinrichtungen 4, 4.2, 4.3 die Funksignale RF1, RF12, RF13 aus, die jeweils eine relativ hohe Bandbreite haben, beispielsweise grösser als ca. 500 MHz, beispielsweise zwischen 1 GHz - 4 GHz. Die Bandbreite, charakterisiert durch eine untere und eine obere Grenzfrequenz, gibt die Breite des dazwischenliegenden Frequenzspektrums an, in welchem dominante Frequenzanteile eines zu übertragenden Signals liegen. Die Sendeeinrichtungen 4, 4.2, 4.3 senden die Funksignale RF1, RF12, RF13 gemäss einem für diese Bandbreite ausgelegten Standard für Funkkommunikation, beispielsweise gemäss einem (Breitband-) WLAN/WiFi Standard (802.11ad) oder einem Standard für die Ultra-Breitband (ultra-wideband (UWB)) Technologie (IEEE 802.15.4a). Die Funksignale RF1, RF12, RF13 können auch gemäss dem 5G Standard oder einem anderen oder zukünftigen Standard für breitbandige Funkkommunikation ausgesendet werden.

Die Eigenschaften und Funktionen der Sendeinrichtungen 4, 4.2, 4.3 werden im Folgenden beispielhaft anhand der Sendeeinrichtung 4 beschrieben. Der Fachmann erkennt, dass jede weitere Sendeeinrichtung 4.2, 4.3 im Wesentlichen die gleichen Eigenschaften und Funktionen aufweist.

Die Sendeeinrichtung 4 erzeugt und sendet mit dem Funksignal RF1 in einem Ausführungsbeispiel eine Trainingssequenz, die periodisch oder kontinuierlich ausgesendet wird. Die Trainingssequenz besteht aus vordefinierten Bitmustern, sodass die Trainingssequenz für die Sendeeinrichtung 4 charakteristisch ist; damit kann das Funksignal RF1 von anderen Funksignalen (z. B. dem Funksignal RF2) unterschieden werden. In einem Ausführungsbeispiel kann das Funksignal RF1 mittels der Trainingssequenz in einem Empfänger der Sendeeinrichtung 4 zugeordnet werden kann. Die Trainingssequenz kann beispielsweise eine m-Sequenz (Folge maximaler Länge (maximum length sequence)) sein, die z. B. mittels Schieberegister mit einem Generatorpolynom oder mittels eines Computerprogramms erzeugt werden kann.

Das Funksignal RF1 kann in einem Ausführungsbeispiel ausgestaltet sein, um neben der Trainingssequenz zusätzliche Information zu übertragen, beispielsweise Angaben zu einem Standort der Sendeeinrichtung 4 oder eine Senderkennung, die in einer Datenbank dem Standort zugeordnet ist. Das Funksignal RF1 kann ausserdem dazu vorgesehen sein, das mobile Gerät 6 zum Senden eines Antwortsignals zu veranlassen, beispielsweise um das Antwortsignal in eine definierte zeitliche Beziehung zum Funksignal RF1 zu setzen, beispielsweise hat das Antwortsignal einen zeitlichen Versatz zum Funksignal RF1.

Die Empfangseinrichtung 14 ist kompatibel zum Standard für Funkkommunikation gemäss dem die Sendeeinrichtungen 4, 4.2, 4.3 senden. Die Empfangseinrichtung 14 ist zudem dazu ausgelegt, die breitbandigen Funksignale RF1, RF12, RF13 zu empfangen und die Trainingssequenzen auszuwerten. Die Empfangseinrichtung 14 empfängt auch das vom mobilen Gerät 6 des Nutzers 2 ausgesendete Funksignal RF2, wenn sich der Nutzer 2 bzw. das mobile Gerät 6 in Funkreichweite zur Empfangseinrichtung 14 befindet.

Das mobile Gerät 6 hat ein Funkmodul, das in einem Ausführungsbeispiel das Funksignal RF2 entsprechend dem Standard für Funkkommunikation erzeugt und sendet, der für die Sendeeinrichtung 4 gewählt ist. Ähnlich den Funksignalen RF1, RF12, RF13 ist auch das Funksignal RF2 breitbandig, d. h. die Bandbreite ist beispielsweise grösser als ca. 500 MHz, beispielsweise zwischen 1 GHz - 4 GHz. In einem Ausführungsbeispiel erzeugt und sendet das Funkmodul mit dem Funksignal RF2 eine Trainingssequenz, die periodisch oder kontinuierlich ausgesendet wird und für das mobile Gerät 6 charakteristisch sein kann. In den Ausführungsbeispielen der hier beschriebenen Technologie ist das Funkmodul des mobilen Geräts 6 aktiviert, wenn sich der Nutzer 2 in der öffentlichen Zone 22 aufhält. Im aktivierten Zustand sendet das mobile Gerät 6 das Funksignal RF2 beispielsweise kontinuierlich aus; es kann in einem Ausführungsbeispiel so konfiguriert (programmiert) sein, dass es das Funksignal RF2 erst nach Empfang des von der Sendeeinrichtung 4 gesendeten Funksignal RF1 aussendet, beispielsweise als Antwortsignal für Synchronisationszwecke.

In einem Ausführungsbeispiel kann das mobile Gerät 6 ausserdem zum Senden einer Kennung konfiguriert sein, die es erlaubt, das mobile Gerät 6 dem Nutzer 2 zuzuordnen (wie an anderer Stelle dieser Beschreibung ausgeführt). Die Kennung kann mit dem Funksignal RF2 gesendet werden, beispielsweise darin eingebettet und gemäss dem für das Funksignal RF2 verwendeten Standard für Funkkommunikation. Die Kennung kann auch getrennt vom Funksignal RF2 gesendet werden, beispielsweise unter Verwendung der Bluetooth Funktechnologie oder einer (eventuell schmalbandigen) WLAN/WiFi Funktechnologie; in diesem Fall ist die gewählte Funktechnologie auch in der Empfangseinrichtung 14 implementiert, so dass die Kennung empfangen werden kann.

Das mobile Gerät 6 kann z. B. eine anwendungsspezifische Softwareanwendung (auch als App bezeichnet) aufweisen, die beispielsweise durch den Nutzer 2 aktivierbar ist. Die anwendungsspezifische Softwareanwendung wird in einem Ausführungsbeispiel in Verbindung mit der Zugangskontrolle und der Nutzung von Aufzügen verwendet. Die anwendungsspezifische Software steuert in einem Ausführungsbeispiel das Erzeugen und Senden des Funksignals RF2. Je nach Ausgestaltung kann diese Software auch die Kennung des mobilen Geräts 6 erzeugen, beispielsweise eine für das mobile Gerät 6 einzigartige und zeitlich unveränderliche Kennung. Eine solche durch Software erzeugte Kennung stellt eine Alternative zu einer Geräteidentifikationsnummer und einer Telefonnummer, die ebenfalls als Kennung verwendet werden können, dar.

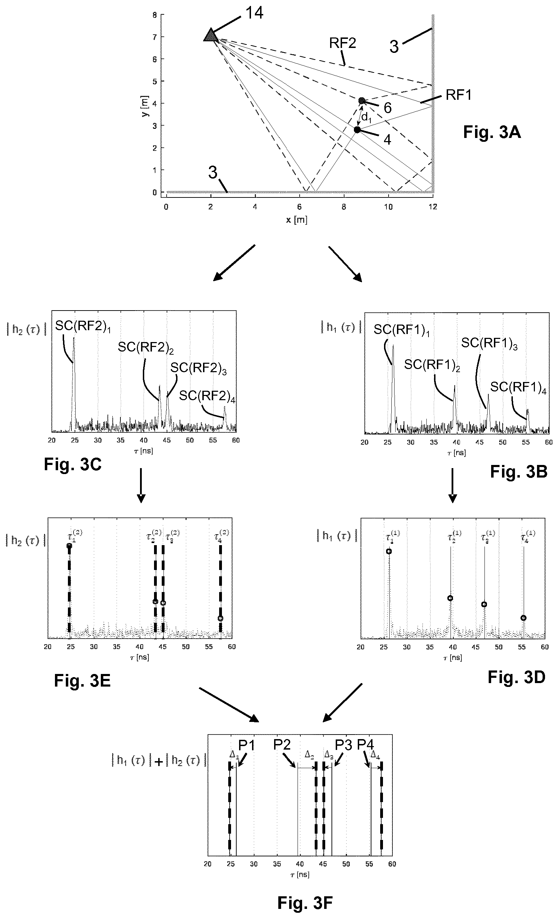

Die Bestimmung der Ähnlichkeitsgrade und deren Anwendung für eine Positionsbestimmung sind im Folgenden in Verbindung mit Fig. 3A-Fig. 3F erläutert. Die Erläuterung erfolgt dabei für die Sendeeinrichtung 4 und den Nutzer 2, um die Distanz $d_1$ des Nutzers 2 bzw. des mobilen Geräts 6 zur Sendeeinrichtung 4 zu bestimmen. Die Distanzen $d_{12}$, $d_{13}$ zu den Sendeeinrichtungen 4.2, 4.3 können in analoger Weise bestimmt werden.

Fig. 3A zeigt eine schematische Darstellung einer Mehrwege-Signalausbreitung ausgehend von Funksignalquellen (4, 6). Die Funksignalquellen entsprechen in der Situation gemäss Fig. 1 der Sendeeinrichtung 4 und dem mobilen Gerät 6, die durch die Distanz $d_1$ voneinander getrennt sind. Fig. 3A zeigt ausserdem die in Fig. 1 dargestellte Empfangseinrichtung 14, eine Wand 3 mit zwei senkrecht aufeinander stehenden Wandflächen und ein X-Y Koordinatensystem.

Die Empfangseinrichtung 12 empfängt die vom mobilen Gerät 6 und der Sendeeinrichtung 4 ausgesendeten Funksignale RF1, RF2. Die Funksignale RF1, RF2 breiten sich im Raum in alle Richtungen aus und werden dabei an eventuell vorhandenen Hindernissen und Wänden 3 mehr oder weniger reflektiert, gebeugt und/oder gestreut oder anderweitig in der Ausbreitung beeinflusst. Dies ist dem Fachmann beispielsweise unter dem Begriff "Mehrwegeausbreitung" bekannt. Zur Illustration sind in Fig. 3A einige dieser Signalwege gezeigt, wobei durchgezogene Linien die Signalwege des von der Sendeeinrichtung 4 ausgesendeten Funksignals RF1 darstellen und gestrichelte Linien die Signalwege des vom mobilen Gerät 6 ausgesendeten Funksignals RF2 darstellen. Die Empfangseinrichtung 14 empfängt beispielsweise das Funksignal RF2 des mobilen Geräts 6 auf direktem Weg und auf einer Vielzahl anderer Wege. In analoger Weise empfängt die Empfangseinrichtung 14 das Funksignal RF1 der Sendeeinrichtung 4. Der Fachmann erkennt, dass ein Empfang auf direktem Weg nicht immer gegeben ist, weil sich z. B. ein Hindernis (z. B. ein Nutzer 2) zwischen der Empfangseinrichtung 14 und der Sendeeinrichtung 4 befindet, und dass in einem solchen Fall die Empfangseinrichtung 14 nur Signale empfängt, die sich auf indirekten Wegen ausbreiten.

Wie oben ausgeführt, sind die von der Empfangseinrichtung 14 empfangenen Funksignale RF1, RF2 unterscheidbar, in einem Ausführungsbeispiel beispielsweise wegen unterschiedlicher Trainingssequenzen. Ist die Trainingssequenz eine m-Sequenz, dann existieren für gewisse Längen $(2^N-1)$ der Bitfolgen orthogonale m-Sequenzen, mittels derer mehrere Sender (hier die Sendeeinrichtung 4 und das mobile Gerät 6) eine Trainingssequenz zu einem Empfänger (hier die Empfangseinrichtung 14) senden können, ohne dass es zu Interferenzen kommt. Das Funksignal RF2 des mobilen Geräts 6 kann auch die Kennung des mobilen Geräts 6 aussenden, sodass es vom Funksignal RF1 unterschieden werden kann, auch wenn das Funksignal RF1 selbst keine individuelle Kennung enthält. Die Empfangseinrichtung 14 bestimmt für jedes Funksignal RF1, RF2 eine dazugehörige Kanalimpulsantwort $h_1(\tau)$, $h_2(\tau)$.

Dem Fachmann ist bekannt, dass die Kanalimpulsantwort $h(\tau)$ eine Beschreibung des momentanen linearen Übertragungskanals ist und, per Definition, jenem Signal entspricht, das an einem Ausgang des Übertragungskanals bestimmt werden kann, wenn an einem Eingang des Übertragungskanals ein Dirac-Impuls als Eingangssignal zugeführt wird. Die Kanalimpulsantwort beschreibt die Wirkung, die der Übertragungskanal auf das Eingangssignal ausübt, beispielsweise als Funktion der Zeit. Die Kenntnis der Kanalimpulsantwort $h(\tau)$ verbessert beispielsweise in einem Empfänger ein Decodieren von Empfangssymbolen; in manchen funkbasierten Kommunikationssystemen (z. B WLAN 802.11) wird die Kanalimpulsantwort $h(\tau)$ daher empfängerseitig geschätzt. Die Schätzung der Kanalimpulsantwort $h(\tau)$ kann auf einer empfangenen Trainingssequenz basieren.

Basierend auf dem Funksignal RF1, das von der Sendeeinrichtung 4 ausgesendet wird, kann nach Empfang durch die Empfangseinrichtung 14 eine erste Kanalimpulsantwort $h_1(\tau)$ bestimmt werden; Fig. 3B zeigt eine schematische Darstellung einer beispielhaften Betragsfunktion $|h_1(\tau)|$ der ersten Kanalimpulsantwort $h_1(\tau)$ als Funktion der Zeit in Nanosekunden (ns). In dieser beispielhaften Darstellung hat die Betragsfunktion $|h_1(\tau)|$ vier Spitzenwerte bei $\tau_1 \approx 26$ ns, $\tau_2 \approx 40$ ns, $\tau_3 \approx 47$ ns und $\tau_4 \approx 55$ ns; jeder dieser Spitzenwerte entspricht einer Mehrwege-Signalkomponente $SC(RF1)_k$ (k = 1, 2, 3, 4) des Funksignals RF1, die in diesem Ausführungsbeispiel bei der Auswertung berücksichtigt werden.

Basierend auf dem Funksignal RF2, das vom mobilen Gerät 6 ausgesendet wird, kann nach Empfang durch die Empfangseinrichtung 14 eine zweite Kanalimpulsantwort $h_2(\tau)$ bestimmt werden; Fig. 3C zeigt eine schematische Darstellung einer beispielhaften Betragsfunktion $|h_2(\tau)|$ der zweiten Kanalimpulsantwort $h_2(\tau)$ als Funktion der Zeit in Nanosekunden (ns). In dieser beispielhaften Darstellung hat die Betragsfunktion $|h_2(\tau)|$ vier Spitzenwerte bei $\tau_1 \approx 25$ ns, $\tau_2 \approx 43$ ns, $\tau_3 \approx 45$ ns und $\tau_4 \approx 58$ ns, ; jeder dieser Spitzenwerte entspricht einer Mehrwege-Signalkomponente $SC(RF2)_k$ (k = 1, 2, 3, 4) des Funksignals RF2, die in diesem Ausführungsbeispiel bei der Auswertung berücksichtigt werden.

In einem Ausführungsbeispiel können die Mehrwege-Signalkomponente $SC(RF1)_1$, $SC(RF2)_1$ jeweils einer auf direktem Funkweg empfangenen Signalkomponente entsprechen. Die Empfangseinrichtung 14 hat somit "Sichtverbindung" (line of sight) zur Sendeeinrichtung 4 und zum mobilen Gerät 6. Der Fachmann erkennt, dass je nach momentan vorherrschender Situation in der öffentlichen Zone 22 (z. B. zwischen dem mobilen Gerät 6 und der Empfangseinrichtung 14 befindet sich ein Hindernis (z. B. ein anderer Nutzer oder ein Gebäudeteil)) diese Sichtverbindung nicht gegeben sein kann. In einer solchen Situation kann mindestens eine dieser (ersten) Mehrwege-Signalkomponente $SC(RF1)_1$, $SC(RF2)_1$ nicht auftreten. Die hier beschriebene Technologie ermöglicht auch in dieser Situation, den Ähnlichkeitsgrad zu bestimmen.

Der Fachmann erkennt auch, dass die Empfangseinrichtung 14 und die Signalverarbeitungseinrichtung 8 ausgestaltet sind, z. B. eine festgelegte Empfangsbandbreite haben, um in den Funksignalen RF1, RF2 mehrere Mehrwege-Signalkomponente $SC(RF1)_k$, $SC(RF2)_k$ aufzulösen, damit sie auswertbar sind. Wie oben ausgeführt, ist die jeweilige Bandbreite der Funksignale RF1, RF2 grösser als 500 MHz, entsprechend dazu ist die Empfangsbreite der Empfangseinrichtung 14 festzulegen. Je höher die Bandbreite der Funksignale RF1, RF2 ist, desto grösser ist der Abstand zwischen den Signalkomponenten $SC(RF1)_k$, $SC(RF2)_k$ und desto genauer können die Signalkomponenten $SC(RF1)_k$, $SC(RF2)_k$ und deren zeitliche Differenz ausgewertet werden. Der Fachmann erkennt ausserdem, dass die Zahl k der Mehrwege-Signalkomponente $SC(RF1)_k$, $SC(RF2)_k$ nicht auf vier beschränkt ist.

Die Signalverarbeitungseinrichtung 8 detektiert für jede der Kanalimpulsantworten $h_1(\tau)$, $h_2(\tau)$ die Mehrwege-Signalkomponente $SC(RF1)_k$, $SC(RF2)_k$, die dazugehörigen Spitzenwerte und deren zeitliches Auftreten $(\tau)$. Dies ist in Fig. 3D und Fig. 3E illustriert. Fig. 3D ist eine schematische Darstellung der Betragsfunktion $|h_1(\tau)|$ der ersten Kanalimpulsantwort $h_1(\tau)$ mit den eingezeichneten beispielhaften vier Mehrwege-Signalkomponente $SC(RF1)_k$, und Fig. 3E ist eine schematische Darstellung der Betragsfunktion $|h_2(\tau)|$ der zweiten Kanalimpulsantwort $h_2(\tau)$ mit den eingezeichneten beispielhaften vier Mehrwege-Signalkomponente $SC(RF2)$, jeweils zu den Zeitpunkten $\tau_1$, $\tau_2$, $\tau_3$, $\tau_4$.

Das zeitliche Auftreten der Mehrwege-Signalkomponente $SC(RF1)_k$, $SC(RF2)_k$ wird aus den Kanalimpulsantworten $h_1(\tau)$, $h_2(\tau)$ extrahiert. Für einen solchen Extraktionsprozess kann in einem Ausführungsbeispiel der SAGE-Algorithmus (Space-Alternating Generalized Expectation-Maximization) verwendet werden, wie beispielsweise beschrieben in: B. H. Fleury, et al., "Channel parameter estimation in mobile radio environments using the SAGE algorithm", IEEE Journal on selected areas in communications, Vol. 17, No. 3, Seiten, 434 - 450, 1999, und T. Santos, J. Karedal, P. Almers, F.

Tufvesson, and A. Molisch, "Modeling the ultra wideband outdoor channel: Measurements and parameter extraction method," IEEE Transactions on Wireless Communications, Vol. 9, No. 1, Seiten 282 - 290, 2010.

Aus Fig. 3B - 3D ist erkennbar, dass die Kanalimpulsantworten $h_1(\tau)$, $h_2(\tau)$ ähnlich sind, weil sich die Sendeeinrichtung 4 und das mobile Gerät 6 relativ nah zueinander in der gleichen Umgebung (öffentliche Zone 22) aufhalten. Dabei gilt, dass je kleiner die Distanz $d_1$ ist, d. h. je näher sich das mobile Gerät 6 bei der Sendeeinrichtung 4 befindet, desto ähnlicher sind die Kanalimpulsantworten $h_1(\tau)$, $h_2(\tau)$. Im umgekehrten Fall, d. h. bei grösser werdender Distanz $d_1$, nimmt die Ähnlichkeit der Kanalimpulsantworten $h_1(\tau)$, $h_2(\tau)$ zunehmend ab. In der in Fig. 1 gezeigten Situation ist die Umgebung, in der sich die Sendeeinrichtung 4 und das mobile Gerät 6 befinden, relativ eng begrenzt, sie ist z. B. eine Eingangshalle in einem Gebäude. Die Ähnlichkeit der Kanalimpulsantworten $h_1(\tau)$, $h_2(\tau)$ zeigt sich z. B. dadurch, dass (bei Sichtverbindung) beide vier erkennbar hervortretende Mehrwege-Signalkomponenten SC(RF1)$_k$, SC(RF2)$_k$ haben, die zu ähnlichen Zeitpunkten $\tau_1$, $\tau_2$, $\tau_3$, $\tau_4$ auftreten.

Die jeweils zuerst auftretende Mehrwege-Signalkomponente SC(RF1)$_1$,SC(RF2)$_1$ (k = 1) ergibt sich aus dem Funksignal RF1, RF2, das bei Sichtverbindung auf direktem Weg (z. B. ohne Reflektion an der Wand 3) von der Empfangseinrichtung 14 empfangen wird. Bei diesen zuerst auftretenden Mehrwege-Signalkomponenten SC(RF1)$_1$, SC(RF2)$_1$ (k = 1) sind die Spitzenwerte in der Regel am grössten. Die Spitzenwerte der nachfolgenden Mehrwege-Signalkomponenten SC(RF1)$_k$, SC(RF2)$_k$ (k = 2, 3, 4) nehmen in der Regel der Reihenfolge nach ab.

Gemäss der hier beschriebenen Technologie wird die Ähnlichkeit der Kanalimpulsantworten $h_1(\tau)$, $h_2(\tau)$ genutzt, um einen Ähnlichkeitsgrad zu bestimmen. Basierend auf dem Ähnlichkeitsgrad wird die Distanz $d_1$ bestimmt. Für die Bestimmung des Ähnlichkeitsgrads werden die Mehrwege-Signalkomponenten SC(RF1)$_k$, SC(RF2)$_k$ (k = 1, 2, 3, 4) paarweise betrachtet, d. h. die zuerst auftretenden Mehrwege-Signalkomponenten SC(RF1)$_1$,SC(RF2)$_1$ (k = 1) bilden ein Paar P1, und die an zweiter Stelle auftretenden Mehrwege-Signalkomponenten SC(RF1)$_2$, SC(RF2)$_2$ (k = 2) bilden ein Paar P2; entsprechend dazu ergeben sich die Paare P3 und P4.

Fig. 3F zeigt eine schematische Darstellung einer graphischen Überlagerung der in Fig. 3D und 3E gezeigten Betragsfunktionen $|h_1(\tau)|$, $|h_2(\tau)|$, wobei lediglich die Mehrwege-Signalkomponenten SC(RF1)$_k$, SC(RF2)$_k$ gezeigt sind. Die genannte paarweise Betrachtung der Mehrwege-Signalkomponenten SC(RF1)$_k$, SC(RF2)$_k$ ist in Fig. 3F ebenfalls illustriert. Für jedes der Paare P1 - P4 ist eine Zeitdifferenz $\Delta_k$ eingezeichnet, die angibt, ob die jeweilige Mehrwege-Signalkomponente SC(RF2)$_k$ des zweiten Funksignals RF2 vor oder nach der entsprechenden Mehrwege-Signalkomponente SC(RF1)$_k$ des ersten Funksignals RF1 von der Empfangseinrichtung 14 empfangen wird. Ein Vorzeichen der Zeitdifferenz $\Delta_k$ gibt an, welche Signalkomponente eines Paars P1 - P4 zuerst empfangen wird.

Die in Fig. 3F gezeigten Zeitdifferenzen $\Delta_k$ ergeben sich für jedes Paar P1 - P4 aus der Gleichung

$$\Delta_k = \tau^{RF2}_k - \tau^{RF1}_k$$

mit k = 1, ..., K. Wenn diese Zeitdifferenzen $\Delta_k$ bestimmt sind, wird das Paar bestimmt, für das die Zeitdifferenz $\Delta_k$ den grössten Betrag aufweist, d. h. max $\{|\Delta_1|, ..., |\Delta_k|\}$. Das Maximum des Betrags über alle Paare ist ein Mass für die Ähnlichkeit der beiden Kanalimpulsantworten $h_1(\tau)$, $h_2(\tau)$; dieses Mass ist als Ähnlichkeitsgrad bezeichnet. Aus geometrischen Gründen ist die Distanz $d_1$ begrenzt, d. h.

$$d_1 \geq c \cdot |\Delta_k|$$

für jedes k. Die Bestimmung der Distanz $d_1$ erfolgt mit der Gleichung

$$d_1 = E_S \cdot c \cdot SD_S,$$

dabei sind: c die Lichtgeschwindigkeit, $E_S = (K + 1)/K$ ein im Folgenden erläuterter Korrekturfaktor und $SD_S$ = max $\{|\Delta_1|, ..., |\Delta_k|\}$ ein Ähnlichkeitsgrad bei gemeinsamer Zeitreferenz.

Bei den bisherigen Ausführungen zur Bestimmung der Distanz $d_1$ ist angenommen, dass die Funksignale RF1, RF2 eine gemeinsame Zeitreferenz haben, d. h. zueinander synchron sind. Dies kann beispielsweise erreicht werden durch die Verwendung von hochgenauen Uhren in der Sendeeinrichtung 4, dem mobilen Gerät 6 und der Empfangseinrichtung 14 und/oder mittels sogenannter Umlaufzeit-Protokolle (round-trip time protocols) zur Synchronisierung von drahtlos miteinander verbundenen Systemkomponenten. Einen Überblick über derartige Synchronisierungsverfahren bietet beispielsweise Ill-Keun Rhee, et al., "Clock Synchronization in Wireless Sensor Network: An Overview", Sensors 2009, Vol. 9, S. 56 - 85.

Für eine sehr hohe Anzahl K von Mehrwege-Signalkomponenten SC(RF1)$_k$, SC(RF2)$_k$ geht bei synchronen Funksignalen RF1, RF2 der Korrekturfaktor $E_S$ gegen 1. Mit $E_S = 1$ ergibt sich die Distanz $d_1$ aus $d_1 = c \cdot$ max $\{|\Delta_1|, ..., |\Delta_K|\}$. Bei einer relativ geringen Anzahl von K Mehrwege-Signalkomponenten SC(RF1)$_k$, SC(RF2)$_k$ ist der Korrekturfaktor $E_S = (K + 1)/K$. Im hier beschriebenen Ausführungsbeispiel mit K = 4 ist $E_S = 5/4$.

Die hier beschriebene Technologie ist auch einsetzbar, wenn die Funksignale RF1, RF2 keine gemeinsame Zeitreferenz haben, d. h. zueinander asynchron sind. In diesem Fall ergibt sich die Distanz $d_1$ gemäss

$$d_1 = E_A \cdot c/2 \cdot SD_A,$$

dabei sind: c die Lichtgeschwindigkeit, $E_A = (K + 1)/(K - 1)$ ein im Folgenden beschriebener Korrekturfaktor und $SD_A = (\max\{\Delta_1, ..., \Delta_K\} - \min\{\Delta_1, ..., \Delta_K\})$ ein Ähnlichkeitsgrad bei keiner gemeinsamer Zeitreferenz.

Auch bei asynchronen Funksignalen RF1, RF2 geht der Korrekturfaktor $E_A$ für eine sehr hohe Anzahl K von Mehrwege-Signalkomponenten $SC(RF1)_k$, $SC(RF2)_k$ gegen 1. Mit $E_A = 1$ ergibt sich die Distanz $d_1$ aus $d_1 = c/2 \cdot (\max\{\Delta_1, ..., \Delta_K\} - \min\{\Delta_1, ..., \Delta_K\})$. Bei einer relativ geringen Anzahl von K Mehrwege-Signalkomponenten $SC(RF1)_k$, $SC(RF2)_k$ ist der Korrekturfaktor $E_A = (K + 1)/(K - 1)$. Im hier beschriebenen Ausführungsbeispiel mit K = 4 ist $E_A = 5/3$.

Die durch das im Vorhergehenden beschriebene Vorgehen wird die Distanz $d_1$ bestimmt, sie gibt an, wie weit der Nutzer 2 bzw. das mobile Gerät 6 von der Sendeeinrichtung 4 entfernt ist. Analog zu diesem Vorgehen können die Distanzen $d_{12}$, $d_{13}$ bestimmt werden. Zur Bestimmung der Distanzen $d_{12}$, $d_{13}$ werden ebenfalls Ähnlichkeitsgrade bestimmt. Aus einer Auswertung einer Kanalimpulsantwort $h_{12}(\tau)$, die auf dem Funksignal RF12 (Sendeeinrichtung 4.2) basiert, und der Kanalimpulsantwort $h_2(\tau)$ ergibt sich der Ähnlichkeitsgrad bezüglich der Sendeeinrichtung 4.2 und dem mobilen Gerät 6. Daraus kann die Distanz $d_{12}$ zwischen der Sendeeinrichtung 4.2 und dem mobilen Gerät 6 bestimmt werden. Aus einer Auswertung einer Kanalimpulsantwort $h_{13}(\tau)$, die auf dem Funksignal RF13 (Sendeeinrichtung 4.3) basiert, und der Kanalimpulsantwort $h_2(\tau)$ ergibt sich der Ähnlichkeitsgrad bezüglich der Sendeeinrichtung 4.3 und dem mobilen Gerät 6. Daraus kann die Distanz $d_{13}$ zwischen der Sendeeinrichtung 4.3 und dem mobilen Gerät 6 bestimmt werden.

Die Bestimmung der Distanzen $d_1$, $d_{12}$, $d_{13}$ erfolgt durch die Signalverarbeitungseinrichtung 8 im Wesentlichen gleichzeitig. Zu einem bestimmten Zeitpunkt liegen somit die drei Distanzen $d_1$, $d_{12}$, $d_{13}$ bezogen auf den Nutzer 2 vor. Mittels einem Verfahren zur Trilateration kann daraus die Position des Nutzers 2 im Gebäude bestimmt werden. Bei der Trilateration handelt es sich um ein Messverfahren zur Positionsbestimmung eines Punktes, das auf Entfernungs- bzw. Abstandsmessungen zu drei Punkten beruht. Ist z. B. nur die Entfernung zu einem bekannten Punkt bekannt, so liegt bei ebener Betrachtung ein Standort eines Beobachters auf einem Kreis um diesen Punkt. Bei drei bekannten Punkten ist der Standort auf den Schnittpunkten der Kreislinien. Dabei gilt, dass je mehr Messungen zu verschiedenen Bezugspunkten vorliegen, desto genauer kann die Position ermittelt werden. Für die hier beschriebene Technologie bedeutet dies, dass drei oder mehr Sendeeinrichtungen 4, 4.2, 4.3 zur Positionsbestimmung verwendet werden können.

Die Kenntnis der Position des Nutzers 2 kann im Gebäude auf unterschiedliche Art und Weise eingesetzt werden. In einem Ausführungsbeispiel kann erkannt werden, ob sich der Nutzer 2 in der öffentlichen Zone 22 oder (berechtigterweise oder unberechtigterweise) in der zugangsbeschränkten Zone 20 aufhält. Bei einem berechtigten Nutzer 2 kann beispielsweise eine vom mobilen Gerät 6 ausgesendete Kennung genutzt werden, um zu ermitteln, ob der Nutzer 2 bekannt ist. Ist der Nutzer 2 bekannt, ist für ihn z. B. ein Nutzerprofil in einem Gebäudemanagementsystem angelegt, wobei im Nutzerprofil festgelegt ist, welche Rechte der Nutzer 2 im Gebäude hat. Dies kann beispielsweise genutzt werden, um zu entscheiden, ob und welche Gebäudeaktion (z. B. eine Sicherheitsmassnahme) einzuleiten ist.

In einem Ausführungsbeispiel erfolgt die Positionsbestimmung kontinuierlich. Ist beispielsweise eine Positionsbestimmung abgeschlossen, erfolgt nach einer festgelegten Zeitdauer eine erneute Positionsbestimmung. Die Zeitdauer kann z. B. im Bereich von Sekunden oder Millisekunden liegen. Somit wird nicht nur eine momentane Position bestimmt, sondern es wird auch eine Änderung der Position erkannt. Geht der Nutzer 2 beispielsweise in der öffentlichen Zone 22 umher, ergeben sich zeitlich aufeinanderfolgend unterschiedliche Positionen. Damit kann der Weg des Nutzers 2 verfolgt werden. Je nach Ausgestaltung des Gebäudesystems 1 können die Positionen und der Weg gespeichert werden und/oder graphisch in einem Gebäudeplan dargestellt werden.

Unter Verwendung der festgelegten Zeitdauer kann zudem ermittelt werden, mit welcher Geschwindigkeit (V=Weg/Zeit) sich der Nutzer 2 entlang des Wegs bewegt. Aus dem Weg kann auch ermittelt werden, in welche Richtung 2 der Nutzer 2 geht. Bewegt er sich beispielsweise auf ein Ziel (z. B. Aufzug oder Schleuse) zu, kann bestimmt werden, wann er dort vermutlich ankommt. Liegt diese Information vor, kann (evtl. unter Berücksichtigung der im Nutzerprofil festgelegten Rechte) eine Gebäudeaktion bereits veranlasst werden, bevor der Nutzer das Ziel erreicht. Die Gebäudeaktion kann beispielsweise das Bereitstellen einer Aufzugskabine, das Entriegeln einer Tür oder das Veranlassen einer Sicherheitsmassnahme (z. B. wenn sich ein unberechtigter Nutzer 2 auf die Schleuse zubewegt) umfassen.

In der öffentlichen Zone 22 können mehrere Nutzer 2 anwesend sein, wie in Fig. 2 gezeigt, wobei jeder Nutzer 2 ein mobiles Gerät 6 mit sich führt. Ist dies der Fall, erfolgt die Positionsbestimmung eines jeden anwesenden Nutzers 2 gemäss dem oben beschriebenen Vorgehen. Die Unterscheidung der mobilen Geräte 6 erfolgt in einem Ausführungsbeispiel gemäss den oben genannten Trainingssequenzen oder Kennungen. Die hier beschriebene Technologie kann somit für jeden anwesenden und unterscheidbaren Nutzer 2 getrennt angewendet werden, um die Position bzw. die Positionsänderungen dieses Nutzers 2 zu bestimmen. Sind die Positionen der anwesenden Nutzer 2 bekannt, können daraus die Distanzen der Nutzer untereinander bestimmt werden.

Die so bestimmte Position des Nutzers 2 bzw.

die so bestimmten Positionen der Nutzer 2 können auf unterschiedliche Weise genutzt werden. In Gebäuden und Situationen, die beispielsweise den in Fig. 1 und Fig. 2 gezeigten Situationen ähnlich sind, kann es zu Ausnahmesituationen kommen. Ein evtl. nicht berechtigter Nutzer kann einem berechtigten Nutzer 2, der die zugangsbeschränkte Zone 20 betreten darf, so dicht folgen, dass dieser Nutzer quasi als Trittbrettfahrer u. U. unerkannt in die zugangsbeschränkte Zone 20 gelangt. Am in Fig. 1 gezeigten Drehkreuz (16), das zur Vereinzelung von Nutzern dient, kann sich der nicht berechtigte Nutzer evtl. hinter dem berechtigten Nutzer hindurchdrängeln. Eine andere Ausnahmesituation kann sich ergeben, wenn zusammengehörende Nutzer einer Gruppe Zugang zur Zone 20 wünschen. Die Nutzer dieser Gruppe können beispielsweise gemeinsam durch den Zugang 24 geschleust werden, um Verzögerungen so gering wie möglich zu halten. Die hier beschriebene Technologie kann in vorteilhafter Weise auch für diese Ausnahmesituationen eingesetzt werden.

Die hier beschriebene Technologie erkennt beispielsweise eine Trittbrettfahrer- oder Drängler-Situation, in der beispielsweise ein nicht berechtigter Nutzer einem berechtigten Nutzer 2 folgt. Die Technologie bestimmt mittels des in Verbindung mit Fig. 3F beschriebenen Vorgehens die Positionen dieser Nutzer und den zeitlichen Verlauf dieser Positionen. Daraus kann bestimmt werden, welche Distanz der nicht berechtigte Nutzer zum berechtigten Nutzer 2 hat. Ist die Distanz kleiner als eine festgelegte Distanz (einzelne Nutzer, die sich z. B. nicht kennen, halten typischerweise Abstand voneinander), deutet dies auf eine Drängler-Situation hin. In diesem Fall kann das Gebäudesystem 1 beispielsweise eine Sicherheitsmassnahme veranlassen. Die Sicherheitsmassnahme kann ein Auslösen eines Alarms und/oder ein Alarmieren von Sicherheitspersonal umfassen, um zu beurteilen, ob es sich tatsächlich um eine Drängler-Situation handelt.

Die hier beschriebene Technologie erkennt auch, wenn mehrere Nutzer relativ eng beieinanderstehen und eine Gruppe bilden. Das Erkennen beruht darauf, dass ein für Gruppen festgelegter Grenzwert für Distanzen erreicht oder unterschritten ist, z. B. weil sich die Nutzer kennen und daher enger beieinanderstehen. Diese Gruppe kann sich beispielsweise abseits von anderen evtl. anwesenden Nutzern aufhalten. Ähnlich zur beschriebenen Trittbrettfahrer- oder Drängler-Situation, basiert das Erkennen einer Gruppen-Situation auf der Bestimmung von Inter-Nutzer Distanzen, d. h., Abständen, die zwischen den Nutzern bestehen. Da für jeden anwesenden Nutzer dessen Position bestimmt wird, kann daraus eine Vielzahl von Inter-Nutzer-Distanzwerten bestimmt werden. Aus der Auswertung dieser Distanzwerte kann erkannt werden, ob und welche Nutzer sich nahe beieinander aufhalten. Diese Nutzer werden der Gruppe zugeordnet. Das Gebäudesystem 1 kann auch in dieser Situation eine Sicherheitsmassnahme veranlassen, beispielsweise Sicherheitspersonal auffordern, die Nutzer in der Gruppe gemeinsam durchzuschleusen.

Wie oben erwähnt kann das Gebäudesystem 1 ein Aufzugssystem, ein Zugangskontrollsystem oder eine Kombination solcher Systeme umfassen. Abhängig von der Position eines Nutzers 2 und basierend auf Information über die Zugangsberechtigung des Nutzers 2, z. B. basierend auf der ihm zugeordneten Kennung, kontrolliert das Zugangskontrollsystem den Zugang 24, sodass nur berechtigte Nutzer 2 in die Zone 20 gelangen können, beispielsweise durch Blockieren oder Freigeben einer Tür, einer Schranke, eines Drehkreuzes, oder einer anderen physischen Barriere oder Schleuse. Bei Zugängen 24 ohne solche physischen Barrieren kann das Zugangskontrollsystem beispielsweise den Zugang 24 dadurch kontrollieren, dass bei Erkennen eines nichtberechtigten Nutzers ein optischer und/oder akustischer Alarm ausgelöst wird; alternativ dazu oder zusätzlich kann eine Benachrichtigung eines Sicherheitsdienstes veranlasst werden. Unabhängig davon, ob die Schleuse mit oder ohne einer physischen Barriere ausgestattet ist, kann zusätzlich eine evtl. vorhandene Informationseinrichtung aktiviert werden, um z. B. einen Nutzer zu informieren. In Fig. 1 und Fig. 2 sind als beispielhafte physische Barrieren zwei Drehkreuze 16 eingezeichnet, die die Steuerung (ACS) 11 des Zugangskontrollsystems jeweils mittels einer drahtgebunden und/oder drahtlosen Verbindung 26 ansteuert.

In Fig. 1 und Fig. 2 sind Komponenten des Zugangskontrollsystems zur Veranschaulichung im Zugang 24 oder in dessen Umgebung angeordnet. Je nachdem für welches Verkehrsaufkommen das Zugangskontrollsystem vorgesehen ist, besteht der Zugang 24 aus mehreren einzelnen Schleusen; beispielsweise kann jedes der beiden Drehkreuze 16 eine Schleuse darstellen. Der Fachmann erkennt, dass in einer konkreten Implementierung das Zugangskontrollsystem bzw. seine Komponenten anders als in den Figuren gezeigt angeordnet sein können. Jede einzelne Schleuse kann beispielsweise einen einzelnen Zugang darstellen, an dem eine Sendeeinrichtung 4 angeordnet sein kann.

Die in Fig. 1 dargestellten Räume 18 können beispielsweise zu einer Gruppe von Aufzügen gehören, die z. B. vier Aufzüge (A-D) umfasst und von einer Aufzugssteuerung (ECS) 10 gesteuert wird. Bewegt sich ein Nutzer 2 auf den Zugang 24 zu, bedeutet dies in einem Ausführungsbeispiel, dass der Nutzer 2 mit einem der Aufzüge auf ein für diesen Nutzer 2 festgelegtes Zielstockwerk transportiert werden möchte. Gemäss einem Ausführungsbeispiel stellt ein solcher Transport eine vom Nutzer 2 gewünschte Gebäudeaktion dar. Mit dem Erkennen des Nutzers 2 wird ein Zielruf veranlasst, dem die Aufzugssteuerung 10 einen Aufzug (A-D) für eine Fahrt von einem Einsteigestockwerk auf ein Zielstockwerk zuteilt. Der zugeteilte Aufzug (A-D) wird dem Nutzer 2 mitgeteilt, beispielsweise mittels einer Anzeigeeinheit. In den in Fig. 1 und Fig. 2 gezeigten Situationen kann jedem Drehkreuz 16 jeweils eine Anzeigeeinheit zugeordnet sein. Nutzt der Nutzer 2 beispielsweise eines der gezeigten Drehkreuze 16, erkennt das Zugangskontrollsystem, an welchem Drehkreuz 16 sich der Nutzer 2 befindet und steuert die dort angeordnete Anzeigeeinheit an, um den zugeteilten Aufzug (z. B. "A") anzuzeigen. Der Fachmann erkennt, dass der zugeteilte Aufzug, dem Nutzer 2 sichtbar und/oder hörbar mitgeteilt werden kann.

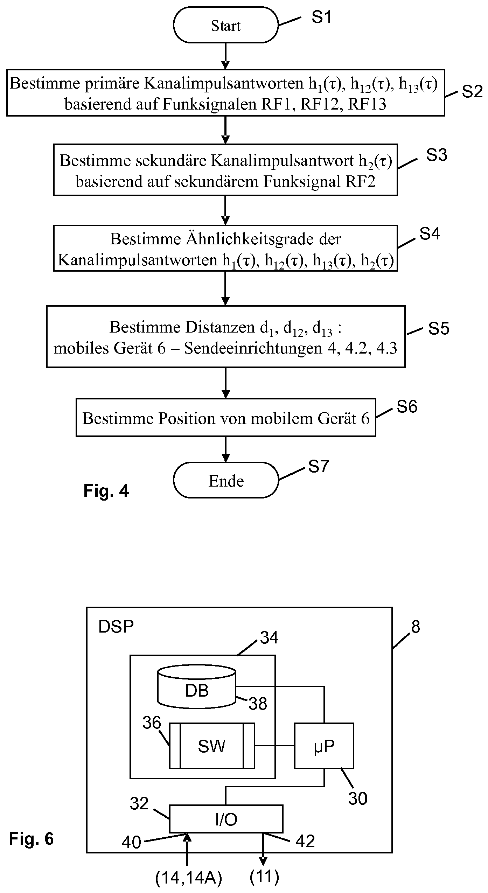

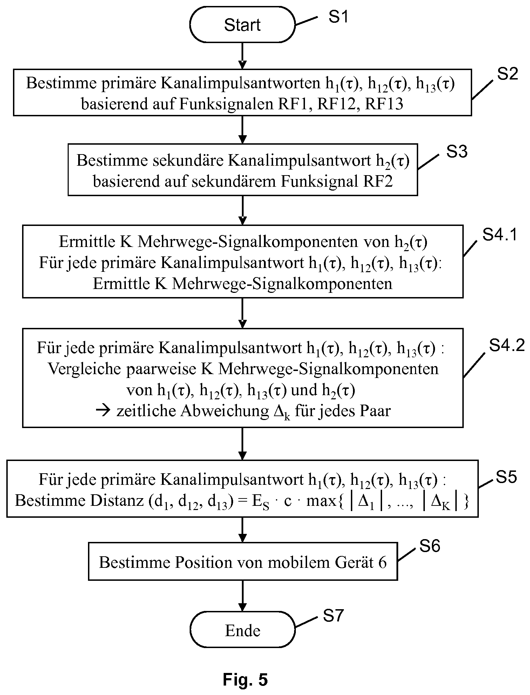

Mit dem Verständnis der oben beschriebenen prinzipiellen Systemkomponenten und deren Funktionalitäten, erfolgt im Folgenden in Verbindung mit Fig. 4 und Fig. 5 eine Beschreibung eines beispielhaften Verfahrens zum Betreiben des Gebäudesystems ausgehend von der in Fig. 1 gezeigten Situation (d. h. ein einziger Nutzer 2). Fig. 4 zeigt ein vereinfachtes Ablaufdiagram des Verfahrens, während Fig. 5 ein Ablaufdiagram mit detaillierteren Schritten des Verfahrens zeigt.

Die Beschreibung erfolgt mit Bezug auf den Nutzer 2, der sich in der öffentlichen Zone 22 aufhält u. U. am Zugang 24 die zugangsbeschränkte Zone 20 zu betreten wünscht, beispielsweise um dort einen Aufzug zu benutzen. Der Nutzer 2 trägt das mobile Gerät 6 bei sich und hat dessen Funkmodul (z. B. für breitbandige WLAN/WiFi oder UWB Kommunikation) aktiviert. Eine eventuell dazugehörige Softwareanwendung ist aktiviert. Die ortsfesten Sendeeinrichtungen 4, 4.2, 4.3 sind ebenfalls aktiviert und senden die (primären) Funksignale RF1, RF2, RF3 aus.

Das in Fig. 4 gezeigte Verfahren beginnt in einem Schritt **S1** und endet in einem Schritt **S7.** Der Fachmann erkennt, dass die Aufteilung in diese Schritte beispielhaft ist, dass einer oder mehrere dieser Schritte in einen oder mehrere Teilschritte aufgeteilt werden können und dass mehrere der Schritte zu einem Schritt zusammengefasst werden können.

In einem Schritt **S2** empfängt die Empfangseinrichtung 14 die von den Sendeeinrichtungen 4, 4.2, 4.3 gesendeten Funksignale RF1, RF2, RF3, wobei jedes Funksignal RF1, RF2, RF3 eine der jeweiligen Sendeeinrichtung 4, 4.2, 4.3 zugeordnete Trainingssequenz überträgt. Die Signalverarbeitungseinrichtung 8 bestimmt für jedes dieser empfangenen Funksignale RF1, RF2, RF3 und darauf basierend eine Kanalimpulsantwort $h_1(\tau)$, $h_{12}(\tau)$, $h_{13}(\tau)$, wie in Verbindung mit Fig. 3B erläutert ist. Zur besseren Unterscheidung sind diese Kanalimpulsantwort $h_1(\tau)$, $h_{12}(\tau)$, $h_{13}(\tau)$ auch als primäre Kanalimpulsantwort $h_1(\tau)$, $h_{12}(\tau)$, $h_{13}(\tau)$ bezeichnet.

Befindet sich der Nutzer 2 mit seinem mobilen Gerät 6 in der öffentlichen Zone 22 und in Funkreichweite zur Empfangseinrichtung 14, empfängt die Empfangseinrichtung 14 in einem Schritt **S3** ein vom mobilen Gerät 6 ausgesendetes (sekundäres) Funksignal RF2, das die dem mobilen Gerät 6 zugeordnete Trainingssequenz überträgt. Die Signalverarbeitungseinrichtung 8 bestimmt basierend auf dem empfangenen Funksignal RF2 eine sekundäre Kanalimpulsantwort $h_2(\tau)$, wie in Verbindung mit Fig. 3C erläutert ist.

Das mobile Gerät 6 sendet das Funksignal RF2 beispielsweise als Antwort auf empfangene Funksignale, die die Sendeeinrichtungen 4, 4.2, 4.3 beispielsweise periodisch aussenden. Bei diesen Funksignalen kann es sich um die Funksignale RF1, RF2, RF3 oder ein oder mehrere separate Funksignale für Synchronisierungszwecke handeln. Das Funksignal RF2 enthält eine Trainingssequenz, wie oben beschrieben, durch die das Funksignal RF2 in der Auswerteeinrichtung 12 von den Funksignalen RF1, RF2, RF3 unterschieden werden kann. Das mobile Gerät 6 kann das Funksignal RF2 auch unabhängig von einem äusseren Ereignis oder Einfluss (z. B. ohne Empfang eines oder mehrerer Funksignale) aussenden, beispielsweise gesteuert durch die Softwareanwendung.

Das mobile Gerät 6 kann auch eine Kennung des mobilen Geräts 6 aussenden, entweder eingebettet in das Funksignal RF2 oder als separates Funksignal, das z. B. gemäss einer Bluetooth Technologie ausgesendet wird. Mittels dieser Kennung kann überprüft werden, ob sie in einer Datenbank mit einer Vielzahl von Nutzerprofilen einem zugangsberechtigten Nutzer 2 zugeordnet ist. Die Steuerung 11 des Zugangskontrollsystems kann diese Überprüfung beispielsweise unmittelbar nach dem (erstmaligen) Empfang der Kennung durch die Empfangseinrichtung 14 durchführen, auch wenn der Nutzer 2 sich nur in der öffentlichen Zone 22 aufhält und zu diesem Zeitpunkt noch keinen Zutritt wünscht. Die Überprüfung kann auch erst dann erfolgen, wenn der Nutzer 2 tatsächlich Zutritt wünscht, z. B. dann, wenn er sich sehr nahe am Zugang 24 bzw. der Sendeeinrichtung 14 befindet. Im hier beschriebenen Ausführungsbeispiel ist angenommen, dass der Nutzer 2 zugangsberechtigt ist und für ihn in einem Schritt **S6** eine gewünschte Gebäudeaktion veranlasst wird.

In einem Schritt **S4** bestimmt die Signalverarbeitungseinrichtung 8 Ähnlichkeitsgrade der Kanalimpulsantworten $h_1(\tau)$, $h_{12}(\tau)$, $h_{13}(\tau)$, $h_2(\tau)$ mittels eines Vergleichs der sekundären Kanalimpulsantwort $h_2(\tau)$ mit jeder der primären Kanalimpulsantworten $h_1(\tau)$, $h_{12}(\tau)$, $h_{13}(\tau)$. Der Ähnlichkeitsgrad ($\max \{ | \Delta_1 | , ..., | \Delta_K | \}$) wird gemäss der oben genannten Gleichung $\Delta_K = \tau^{RF2}_k - \tau^{RF1}_k$ bestimmt.

In einem Schritt **S5** werden die Distanzen $d_1$, $d_{12}$, $d_{12}$ basierend auf den Ähnlichkeitsgraden bestimmt. Dafür wird bei synchronen Funksignalen RF1, RF12, RF13, RF2 bezüglich jeder Sendeeinrichtung 4, 4.2, 4.3 die Distanz gemäss $d = E_S \cdot c \cdot \max \{ | \Delta_1 | , ..., | \Delta_K | \}$ bestimmt; bei asynchronen Funksignalen RF1, RF12, RF13, RF2 wird die Distanz gemäss $d = E_A \cdot c/2 \cdot (\max \{\Delta_1, ..., \Delta_K\} - \min\{\Delta_1, ..., \Delta_K\})$ bestimmt.

In einem Schritt **S6** wird die Position des mobilen Geräts 6 bestimmt. Aus den Distanzen $d_1$, $d_{12}$, $d_{12}$ wird in einem Ausführungsbeispiel mittels Trilateration die Position des Nutzers 2 bzw. des mobilen Geräts 6 bestimmt. Wie oben erwähnt, kann die Positionsbestimmung kontinuierlich erfolgen, um z. B. den Weg des Nutzers 2 zu verfolgen.

Wie oben erwähnt, zeigt Fig. 5 ein Ablaufdiagram mit detaillierteren Schritten des Verfahrens gemäss einem Ausführungsbeispiel. In Fig. 5 ist der in Fig. 4 gezeigte Schritt **S4** detaillierter durch Schritte **S4.1, S4.2** dargestellt, die Schritte **S1-S3** und **S5-S7** entsprechen im Wesentlichen den in Fig. 4 gezeigten Schritten.

Im Schritt **S4.1** werden für die (sekundäre) Kanalimpulsantwort $h_2(\tau)$ die Mehrwege-Signalkomponenten $SC(RF2)_k$ ermittelt, und für jede primäre Kanalimpulsantwort $h_1(\tau)$, $h_{12}(\tau)$, $h_{13}(\tau)$ werden ebenfalls Mehrwege-Signalkomponenten ermittelt, wie in Verbindung mit Fig. 3D und Fig. 3E (bezogen auf die Sendeeinrichtung 4) erläutert. Im hier beschriebenen Ausführungsbeispiel werden jeweils vier Mehrwege-Signalkomponenten (K = 4) ermittelt.

In einem Schritt **S4.2** erfolgt für jede primäre Kanalimpulsantwort $h_1(\tau)$, $h_{12}(\tau)$, $h_{13}(\tau)$ ein paarweiser Vergleich ihrer Mehrwege-Signalkomponenten mit den Mehrwege-Signalkomponenten $SC(RF2)_k$ der sekundären Kanalimpulsantworten $h_2(\tau)$. Aus diesem Vergleich wird für jedes Paar P1 - P4 die zeitliche Abweichung $\Delta_k = \tau^{RF2}{}_k - \tau^{RF1}{}_k$ bestimmt, wie in Verbindung mit Fig. 3F erläutert ist.

Abweichend von der in Fig. 1 gezeigten Situation, können sich gemäss der in Fig. 2 gezeigten Situation mehrere Nutzer 2 ($U_1$, $U_2$, $U_3$, $U_4$) in der öffentlichen Zone 22 aufhalten. Jeder dieser Nutzer 2 trägt ein mobiles Gerät 6 bei sich, das, wie oben beschrieben, ein Funksignal gemäss der im Gebäude verwendeten Funktechnologie sendet. Die Empfangseinrichtung 14 empfängt daher eine Vielzahl von weiteren Funksignalen. Für jedes der Funksignale wird eine weitere Kanalimpulsantwort bestimmt, die mit der ersten Kanalimpulsantwort $h_1(\tau)$ verglichen wird, um eine Distanz $d_1$, $d_2$, $d_3$, $d_4$ des jeweiligen elektrischen Geräts 6 zur Sendeeinrichtung 4 zu ermitteln. Analog zu den obigen Ausführungen können Distanzen zu den weiteren Sendeeinrichtungen 4, 4.2, 4.3 bestimmt werden. Damit kann beispielsweise erkannt werden, welcher Nutzer 2 ($U_1$, $U_2$, $U_3$, $U_4$) der Sendeeinrichtung 4 am nächsten ist.

Wie oben erwähnt ist in einem Ausführungsbeispiel zusätzlich zur Empfangseinrichtung 14 die Empfangseinrichtung 14A vorhanden und mit der Signalverarbeitungseinrichtung 8 verbunden, wie in Fig. 2 gezeigt. Die Empfangseinrichtung 14A ist so angeordnet, dass sie die Funksignale RF1, RF12, RF13 der Sendeeinrichtungen 4, 4.2, 4.3 empfängt. Befindet sich das mobile Gerät 6 in Empfangsreichweite zur Empfangseinrichtung 14A, empfängt auch diese das vom mobilen Gerät 6 ausgesendete Funksignal RF2.

Die Signalverarbeitungseinrichtung 8 verarbeitet somit Kanalimpulsantworten, die auf dem Empfang der Funksignale RF1, RF12, RF13, RF2 durch die Empfangseinrichtung 14A basieren. Die Verarbeitung umfasst die in Verbindung mit Fig. 3F beschriebene paarweise Bestimmung von Zeitdifferenzen $\Delta_k$ gemäss $\Delta_k = \tau^{RF2}{}_k - \tau^{RF1}{}_k$. Die Signalverarbeitungseinrichtung 8 verarbeitet zudem die Kanalimpulsantworten, die auf dem Empfang der Funksignale RF1, RF12, RF13, RF2 durch die Empfangseinrichtung 14 basieren, um Zeitdifferenzen $\Delta_k$ zu bestimmen. Aus der Gesamtheit dieser Zeitdifferenzen $\Delta_k$, d. h. basierend auf dem Empfang durch die Empfangseinrichtungen 14, 14A, wird das Paar bestimmt, für das die Zeitdifferenz $\Delta_k$ den grössten Betrag aufweist, d. h. max $\{ |\Delta_1|, ..., |\Delta_K| \}$. Die Weiterverarbeitung, um die Distanz zu bestimmten, erfolgt wie oben beschrieben. Ein Vorteil der Nutzung der zusätzlichen Empfangseinrichtung 14 ist, dass dadurch die Genauigkeit der Bestimmung der Distanz verbessert wird.

Fig. 6 ist eine schematische Darstellung eines Ausführungsbeispiels der Signalverarbeitungseinrichtung 8 des in Fig. 1 und Fig. 2 gezeigten Zugangskontrollsystems 1. Die Signalverarbeitungseinrichtung 8 umfasst eine Prozessoreinheit 30, eine Speichereinrichtung 34 und eine Schnittstelleneinrichtung 32 mit einem Signaleingang 40 und einem Signalausgang 42. Die Speichereinrichtung 34 ist ausgestaltet, um eine Messdatenbank 38 und ein Computerprogramm 36 zu speichern. Die Prozessoreinheit 30 ist mit der Speichereinrichtung 34 kommunikativ verbunden, um auf die Messdatenbank 38 und das Computerprogramm 36 gemäss der hier beschriebenen Technologie zuzugreifen. Die Prozessoreinheit 30 ist ausserdem mit der Schnittstelleneinrichtung 32 kommunikativ verbunden, um über einen Signaleingang 40 der Schnittstelleneinrichtung 32 Signale von der Empfangseinrichtung 14, 14A zu empfangen und über einen Signalausgang 42 der Schnittstelleneinrichtung 32 Signale zur der Steuerung 11 des Zugangskontrollsystems 1 zu senden.

Die in den vorhergehenden Ausführungsbeispielen genannte Kennung des mobilen Geräts 6 eines zugangsberechtigten Nutzers 2, bzw. die Kennungen von anderen zugangsberechtigten Nutzern können in einem Ausführungsbeispiel in einer Speichereinrichtung des Zugangskontrollsystems 1 gespeichert sein. Der Fachmann erkennt, dass die Anzahl der in der öffentlichen Zone 22 anwesenden Nutzer 2 zeitlich variiert und dass die Speichereinrichtung aktualisiert wird, wenn ein mobiles Gerät 6 nicht mehr in Funkreichweite ist, z. B. weil der dazugehörige Nutzer 2 die öffentliche Zone 22 verlassen hat ohne Zugang zur zugangsbeschränkten Zone 20 zu wünschen oder weil der dazugehörige Nutzer 2 bereits die zugangsbeschränkte Zone 20 betreten hat. Die Speichereinrichtung speichert somit Datensätze für Nutzer 2, die zu einem bestimmten Zeitpunkt in der öffentlichen Zone 22 anwesend sind. Das Zugangskontrollsystem "weiss" daher, wie viele mobile Geräte 6 sich zu einem bestimmten Zeitpunkt in Funkreichweite befinden und, wenn deren Nutzer 2 für das Gebäude registrierte Nutzer 2 sind, zu welchen Nutzern 2 die mobilen Geräte 6 gehören. Zu diesem Zeitpunkt kann das Zugangskontrollsystem für jeden registrierten Nutzer 2 prüfen, welche Rechte für den Nutzer 2 im Gebäude festgelegt.

Für jeden registrierten Nutzer 2 ist im Zugangskontrollsystem ein Nutzerprofil angelegt, d. h. es ist als Datensatz in einer Datenbank gespeichert. Das Nutzerprofil umfasst persönliche Daten des Nutzers 2 (z. B. Name, Berechtigungsgrund (Bewohner, Mitarbeiter, externer Dienstleister, Besucher)), Zugangsberechtigungen (z. B. bestimmte Räume 18 und Stockwerke) und evtl. zeitliche Zugangsbeschränkungen (z. B. Zugang von Montag bis Freitag, von 7:00 bis 20:00). Im Nutzerprofil ist dem Nutzer 2 ausserdem mindestens ein mobiles Gerät 6 zugeordnet. Alternativ zum Anlegen des Nutzerprofils im Zugangskontrollsystem kann das Nutzerprofil in einer Datenbank eines Gebäudeverwaltungssystems angelegt sein, wobei das Zugangskontrollsystem auf diese Datenbank mittels eines Kommunikationsnetzes zugreifen kann.

Das mobile Gerät 6 kann beispielsweise ein Mobiltelefon, ein Smartphone, ein Tablet PC oder eine Smartwatch sein, wobei diese Geräte üblicherweise mit Hardware ausgestattet sind, die eine Funkkommunikation ermöglichen. Das mobile Gerät 6 kann aber auch eine Brille mit Miniaturcomputer oder ein anderes am Körper getragenes, computergestütztes Gerät (auch als "Wearable Device" bezeichnet) sein. Je nach Ausgestaltung des mobilen Geräts 6 kann es z. B. über ein graphisches Nutzerinterface (auch als Graphical User Interface, GUI, bezeichnet) verfügen, um das mobile Gerät 6 und dessen Funktionen selektiv aktivieren und deaktivieren zu können.

## Patentansprüche

1. Verfahren zum Betreiben eines Gebäudesystems (1), wobei das Gebäudesystem (1) eine Steuereinrichtung (10, 11), Sendeeinrichtungen (4, 4.2, 4.3) für primäre Funksignale (RF1, RF12, RF13 ), insbesondere eine erste Sendeeinrichtung (4) für ein erstes Funksignal (RF1), eine zweite Sendeeinrichtung (4.2) für ein zweites Funksignal (RF12), eine dritte Sendeeinrichtung (4.3) für ein drittes Funksignal (RF13), eine Empfangseinrichtung (14) für Funksignale und eine mit der Empfangseinrichtung (14) kommunikativ verbundene Signalverarbeitungseinrichtung (8) umfasst, wobei das Verfahren umfasst:

   Bestimmen, durch die Signalverarbeitungseinrichtung (8), von primären Kanalimpulsantworten ($h_1(\tau)$, $h_{12}(\tau)$, $h_{13}(\tau)$), wobei eine erste primäre Kanalimpulsantwort ($h_1(\tau)$) auf dem durch die Empfangseinrichtung (14) empfangenen ersten Funksignal (RF1) basiert, wobei eine zweite primäre Kanalimpulsantwort ($h_{12}(\tau)$) auf dem durch die Empfangseinrichtung (14) empfangenen zweiten Funksignal (RF12) basiert und wobei eine dritte primäre Kanalimpulsantwort ($h_{13}(\tau)$) auf dem durch die Empfangseinrichtung (14) empfangenen dritten Funksignal (RF13) basiert;
   Bestimmen, durch die Signalverarbeitungseinrichtung (8), einer sekundären Kanalimpulsantwort ($h_2(\tau)$) basierend auf einem durch die Empfangseinrichtung (14) empfangen sekundären Funksignal (RF2), wobei das sekundäre Funksignal (RF2) von einem ersten mobilen elektronischen Gerät (6) eines ersten Nutzers (2) gesendet wird,
Bestimmen, durch die Signalverarbeitungseinrichtung (8), von Ähnlichkeitsgraden (SD$_S$, SD$_A$) durch Auswerten der Kanalimpulsantworten ($h_1(\tau)$, $h_{12}(\tau)$, $h_{13}(\tau)$, $h_2(\tau)$), wobei ein erster Ähnlichkeitsgrad (SD$_S$, SD$_A$) angibt, wie ähnlich die erste primäre Kanalimpulsantwort ($h_1(\tau)$) und die sekundäre Kanalimpulsantwort ($h_2(\tau)$) zueinander sind, wobei ein zweiter Ähnlichkeitsgrad (SD$_S$, SD$_A$) angibt, wie ähnlich die zweite primäre Kanalimpulsantwort ($h_{12}(\tau)$) und die sekundäre Kanalimpulsantwort ($h_2(\tau)$) zueinander sind und wobei ein dritter Ähnlichkeitsgrad (SD$_S$, SD$_A$) angibt, wie ähnlich die dritte primäre Kanalimpulsantwort ($h_{13}(\tau)$) und die sekundäre Kanalimpulsantwort ($h_2(\tau)$) zueinander sind;
Bestimmen, durch die Signalverarbeitungseinrichtung (8), für jeden Ähnlichkeitsgrad eine Distanz ($d_1$, $d_{12}$, $d_{13}$) des mobilen Geräts (6) zur dem Ähnlichkeitsgrad entsprechenden Sendeeinrichtung (4, 4.2, 4.3), die im Gebäude an festgelegten Orten angeordnet sind; und
Bestimmen, durch die Signalverarbeitungseinrichtung (8), einer Position des mobilen Geräts (6) basierend auf den Distanzen ($d_1$, $d_{12}$, $d_{13}$);
wobei aus jeder der primären Kanalimpulsantworten ($h_1(\tau)$ $h_{12}(\tau)$, $h_{13}(\tau)$) eine erste Folge von zeitlich aufeinanderfolgenden ersten Mehrwege-Signalkomponenten (SC(RF1)k) ermittelt wird;
wobei aus der sekundären Kanalimpulsantwort ($h_2(\tau)$) eine zweite Folge von zeitlich aufeinanderfolgenden zweiten Mehrwege-Signalkomponenten (SC(RF2)k) ermittelt wird;
wobei die Auswertung der primären und sekundären Kanalimpulsantworten ($h_1(\tau)$, $h_{12}(\tau)$, $h_{13}(\tau)$, $h_2(\tau)$) ein paarweises Vergleichen, gemäss der Reihenfolge in der ersten und zweiten Folge, einer jeden zweiten Mehrwege-Signalkomponente (SC(RF2)k) mit ihrer, der Reihenfolge entsprechenden ersten Mehrwege-Signalkomponente (SC(RF1)k) umfasst, um für jedes Paar (P1, P2, P3, P4) eine zeitliche Abweichung (Δk) zu bestimmen, sodass eine maximale zeitliche Abweichung (Δk) und eine minimale zeitliche Abweichung (Δk) vorliegen, wobei der Ähnlichkeitsgrad (SDS, SDA) auf mindestens einer dieser zeitlichen Abweichungen (Δk) basiert,
wobei das erste, das zweite und das dritte Funksignal (RF1, RF12, RF13) und das sekundäre Funksignal (RF2) eine gemeinsame Zeitreferenz haben, wobei für jeden der Ähnlichkeitsgrade das Bestimmen der Distanz (d1, d12, d13) gemäss

$$d = ES \cdot c \cdot SDS$$

erfolgt, dabei sind: c die Lichtgeschwindigkeit, ES = (K + 1)/K ein Korrekturfaktor und SDS = max{ | $\Delta 1$ | , ..., | $\Delta K$ | } der Ähnlichkeitsgrad bei gemeinsamer Zeitreferenz, oder wobei das erste, das zweite und das dritte Funksignal (RF1, RF12, RF13) und das sekundäre Funksignal (RF2) keine gemeinsame Zeitreferenz haben, wobei für jeden der Ähnlichkeitsgrade das Bestimmen der Distanz (d1, d12, d13) gemäss

$$d = EA \cdot c/2 \cdot SDA,$$

erfolgt, dabei sind: c die Lichtgeschwindigkeit, EA = (K + 1)/(K - 1) ein Korrekturfakor, SDA = (max{$\Delta 1$, ..., $\Delta K$} - min{$\Delta 1$, ..., $\Delta K$}) der Ähnlich-keitsgrad bei keiner gemeinsamen Zeitreferenz, K die Anzahl von Mehrwege-Signalkomponenten SC(RF1)$_k$, SC(RF2)k, max{| $\Delta 1$| , ..., | $\Delta K$|} die maximale zeitliche Abweichung von zeitli-chen Abweichungen |$\Delta 1$| , ..., | $\Delta K$| und min{| $\Delta 1$ | , ..., | $\Delta K$|} die minimale zeitliche Abweichung von zeitlichen Abweichungen |$\Delta 1$| , ..., | $\Delta K$|,

2. Verfahren nach Anspruch 1, bei dem die Position des mobilen Geräts (6) mittels eines Verfahrens für Trilateration bestimmt wird.

3. Verfahren nach einem der vorhergehenden Ansprüche, ausserdem umfassend Ermitteln einer ersten Kennung des ersten mobilen elektronischen Geräts (6) aus dem zweiten Funksignal (RF2), wobei die erste Kennung einem Nutzerprofil zugeordnet ist, wenn der erste Nutzer (2) zugangsberechtigt ist.

4. Verfahren nach einem der vorhergehenden Ansprüche, wobei die Empfangseinrichtung (14) eine Anzahl von weiteren sekundären Funksignalen empfängt, die von einer Anzahl von weiteren mobilen elektronischen Geräten (6) ausgesendet werden, die weiteren Nutzern (2) zugeordnet sind, wobei basierend auf jedem empfangenen weiteren sekun-dären Funksignal eine Kanalimpulsantwort be-stimmt wird, die in Verbindung mit den primären Kanalimpulsantworten ($h_1(\tau)$, $h_{12}(\tau)$, $h_{13}(\tau)$) ausge-wertet wird, um Distanzen ($d_1$, $d_2$, $d_3$, $d_4$) des ent-sprechenden weiteren mobilen elektronischen Ge-räts (6) zu den Sendeeinrichtungen (4, 4.2, 4.3) zu ermitteln, um daraus Positionen der weiteren mobilen elektronischen Geräte (6) zu bestimmen.

5. Verfahren nach Anspruch 4, ausserdem aufweisend, unter Verwendung der Positionen der weiteren mobilen elektronischen Geräte (6), Bestimmen von Abständen zwischen den weiteren Nutzern (2).

6. Verfahren nach einem der vorhergehenden Ansprüche, bei dem die Funksignale (RF1, RF12, RF13, RF2) eine Bandbreite von mindestens 500 MHz haben und gemäss einem WLAN/WiFi Standard oder einem Standard für eine Ultra-Breitband Technologie gesendet und empfangen werden.

7. System (1) zur Bestimmung einer Position eines Nutzers (2) in einem Gebäude, wobei das System (1) umfasst:

   eine Steuereinrichtung (10, 11);
   Sendeeinrichtungen (4, 4.2, 4.3) für primäre Funksignale (RF1, RF12, RF13), insbesondere eine erste Sendeeinrichtung (4) für ein erstes Funksignal (RF1), eine zweite Sendeeinrichtung (4.2) für ein zweites Funksignal (RF12), und eine dritte Sendeeinrichtung (4.3) für ein drittes Funksignal (RF13);
   eine Empfangseinrichtung (14) für Funksignale; und
   eine Signalverarbeitungseinrichtung (8), die mit der Empfangseinrichtung (14) kommunikativ verbunden ist, wobei die Signalverarbeitungseinrichtung (8) ausgestaltet ist,

   - um primäre Kanalimpulsantworten ($h_1(\tau)$, $h_{12}(\tau)$, $h_{13}(\tau)$) zu bestimmen, wobei eine erste primäre Kanalimpulsantwort ($h_1(\tau)$) auf dem durch die Empfangseinrichtung (14) empfangenen ersten Funksignal (RF1) basiert, wobei eine zweite primäre Kanalimpulsantwort ($h_{12}(\tau)$) auf dem durch die Empfangseinrichtung (14) empfangenen zweiten Funksignal (RF12) basiert und wobei eine dritte primäre Kanalimpuls-antwort ($h_{13}(\tau)$) auf dem durch die Empfangseinrichtung (14) empfangenen dritten Funksignal (RF13) basiert;
   - um eine sekundäre Kanalimpulsantwort ($h_2(\tau)$) basierend auf einem durch die Emp-fangseinrichtung (14) empfangen sekundä-ren Funksignal (RF2) zu bestimmen, wobei das sekundäre Funksignal (RF2) von einem ersten mobilen elektronischen Gerät (6) eines ersten Nutzers (2) aussendbar ist;
   - um Ähnlichkeitsgrade (SD$_S$, SD$_A$) durch Auswerten der Kanalimpulsantworten ($h_1$ ($\tau$), $h_{12}(\tau)$, $h_{13}(\tau)$, h2($\tau$)) zu bestimmen, wo-bei ein erster Ähnlichkeitsgrad (SD$_S$, SD$_A$) angibt, wie ähnlich die erste primäre Kanal-impulsantwort ($h_1(\tau)$) und die sekundäre Kanalimpulsantwort ($h_2(\tau)$) zueinander

sind, wobei ein zweiter Ähnlichkeitsgrad ($SD_S$, $SD_A$) angibt, wie ähnlich die zweite primäre Kanalimpulsantwort ($h_{12}(\tau)$) und die sekundäre Kanalimpulsantwort ($h_2(\tau)$) zueinander sind und wobei ein dritter Ähnlichkeitsgrad ($SD_S$, $SD_A$) angibt, wie ähnlich die dritte primäre Kanalimpulsantwort ($h_{13}(\tau)$) und die sekundäre Kanalimpulsantwort ($h_2(\tau)$) zueinander sind;

- um für jeden Ähnlichkeitsgrad eine Distanz ($d_1$, $d_{12}$, $d_{13}$) des mobilen Geräts (6) zur dem Ähnlichkeitsgrad entsprechenden Sendeeinrichtung (4, 4.2, 4.3) zu bestimmen, die im Gebäude an festgelegten Orten angeordnet sind; und

- um eine Position des mobilen Geräts (6) basierend auf den Distanzen ($d_1$, $d_{12}$, $d_{13}$) zu bestimmen;

wobei die Signalverarbeitungseinrichtung (8) ausserdem ausgestaltet ist, um aus jeder der primären Kanalimpulsantworten ($h_1(\tau)$ $h_{12}(\tau)$, $h_{13}(\tau)$) eine erste Folge von zeitlich aufeinanderfolgenden ersten Mehrwege-Signalkomponenten (SC(RF1)k) zu ermitteln, und um aus der sekundären Kanalimpulsantwort ($h_2(\tau)$) eine zweite Folge von zeitlich aufeinanderfolgenden zweiten Mehrwege-Signalkomponenten (SC(RF2)k) zu ermitteln;

- wobei die Auswertung der primären und sekundären Kanalimpulsantworten ($h_1(\tau)$, $h_{12}(\tau)$, $h_{13}(\tau)$, $h_2(\tau)$) ein paarweises Vergleichen, gemäss der Reihenfolge in der ersten und zweiten Folge, einer jeden zweiten Mehrwege-Signalkomponente (SC(RF2)k) mit ihrer, der Reihenfolge entsprechenden ersten Mehrwege-Signalkomponente (SC(RF1)k) umfasst, um für jedes Paar (P1, P2, P3, P4) eine zeitliche Abweichung ($\Delta k$) zu bestimmen, sodass eine maximale zeitliche Abweichung ($\Delta k$) und eine minimale zeitliche Abweichung ($\Delta k$) vorliegen, wobei der Ähnlichkeitsgrad (SDS, SDA) auf mindestens einer dieser zeitlichen Abweichungen ($\Delta k$) basiert,

- wobei das erste, das zweite und das dritte Funksignal (RF1, RF12, RF13) und das sekundäre Funksignal (RF2) eine gemeinsame Zeitreferenz haben, wobei für jeden der Ähnlichkeitsgrade das Bestimmen der Distanz (d1, d12, d13) gemäss

$$d = ES \cdot c \cdot SDS$$

- erfolgt, dabei sind: c die Lichtgeschwindigkeit, ES = (K + 1)/K ein Korrekturfaktor und SDS = max{ | $\Delta1$ | , ..., | $\Delta K$ | } der

Ähnlichkeitsgrad bei gemeinsamer Zeitreferenz; oder

- wobei das erste, das zweite und das dritte Funksignal (RF1, RF12, RF13) und das sekundäre Funksignal (RF2) keine gemeinsame Zeitreferenz haben, wobei für jeden der Ähnlichkeitsgrade das Bestimmen der Distanz (d1, d12, d13) gemäss

$$d = EA \cdot c/2 \cdot SDA,$$

- erfolgt, dabei sind: c die Lichtgeschwindigkeit, EA = (K + 1)/(K - 1) ein Korrekturfaktor, SDA = (max{$\Delta1$, ..., $\Delta K$} - min{$\Delta1$, ..., $\Delta K$}) der Ähnlichkeitsgrad bei keiner gemeinsamen Zeitreferenz, K die Anzahl von Mehrwege-Signalkomponenten SC(RF1)k, SC(RF2)k, max{| $\Delta1$| , ..., | $\Delta K$|} die maximale zeitliche Abweichung von zeitlichen Abweichungen |$\Delta1$| , ..., | $\Delta K$| und min{| $\Delta1$ | , ..., | $\Delta K$|} die minimale zeitlichen Abweichung von zeitliche Abweichungen |$\Delta1$| , ..., | $\Delta K$|.

8. System (1) nach Anspruch 7, wobei die Signalverarbeitungseinrichtung (8) ausgestaltet ist, um die Position des mobilen Geräts (6) mittels eines Verfahrens für Trilateration zu bestimmen.

9. System (11) nach einem der Ansprüche 7 - 8, bei dem die Funksignale (RF1, RF12, RF13, RF2) eine Bandbreite von mindestens 500 MHz haben und bei dem die Sendeeinrichtung (4) und die Empfangseinrichtung (14) gemäss einem WLAN/WiFi Standard oder einem Standard für eine Ultra-Breitband Technologie ausgestaltet sind.

**Claims**

1. Method for operating a building system (1), the building system (1) comprising a control device (10, 11), transmitting devices (4, 4.2, 4.3) for primary radio signals (RF1, RF12, RF13), in particular a first transmitting device (4) for a first radio signal (RF1), a second transmitting device (4.2) for a second radio signal (RF12), a third transmitting device (4.3) for a third radio signal (RF13), a receiving device (14) for radio signals and a signal processing device (8) communicatively connected to the receiving device (14), the method comprising:

determining, by the signal processing means (8), primary channel impulse responses ($h_1(\tau)$, $h_{12}(\tau)$, $h_{13}(\tau)$), wherein a first primary channel impulse response ($h_1(\tau)$ is based on the first radio signal (RF1) received by the receiving means (14), wherein a second primary channel

impulse response ($h_{12}(\tau)$) is based on the second radio signal (RF12) by the receiving device (14), and wherein a third primary channel impulse response ($h_{13}(\tau)$) is based on the third radio signal (RF13) received by the receiving device (14);

determining, by the signal processing means (8), a secondary channel impulse response ($h_2(\tau)$) based on a secondary radio signal (RF2) received by the receiving means (14), wherein the secondary radio signal (RF2) is transmitted from a first mobile electronic device (6) of a first user (2),

determining, by the signal processing means (8), degrees of similarity ($SD_S$, $SD_A$) by evaluating the channel impulse responses ($h_1(\tau)$, $h_{12}(\tau)$, $h_{13}(\tau)$, $h_2(\tau)$), where a first degree of similarity ($SD_S$, $SD_A$) indicates how similar the first primary channel impulse response ($h_1(\tau)$) and the secondary channel impulse response ($h_2(\tau)$) are to each other, wherein a second degree of similarity ($SD_S$, $SD_A$) indicates how similar the second primary channel impulse response ($h_{12}(\tau)$) and the secondary channel impulse response ($h_2(\tau)$) are to each other, and wherein a third degree of similarity ($SD_S$, $SD_A$) indicates how similar the third primary channel impulse response ($h_{13}(\tau)$) and the secondary channel impulse response ($h_2(\tau)$) are to each other;

determining, by the signal processing means (8), for each degree of similarity, a distance ($d_1$, $d_{12}$, $d_{13}$) of the mobile device (6) to the transmitting device (4, 4.2, 4.3) corresponding to the degree of similarity, which are arranged in the building at predetermined locations;

determining, by the signal processing device (8), a position of the mobile device (6) based on the distances ($d_1$, $d_{12}$, $d_{13}$);

whereby a first sequence of temporally consecutive first multipath signal components (SC(RF1)k) is determined from each of the primary channel impulse responses ($h_1(\tau)$ $h_{12}(\tau)$, $h_{13}(\tau)$);

whereby a second sequence of temporally consecutive second multipath signal components (SC(RF2)k) is determined from the secondary channel impulse response ($h2(\tau)$);

wherein the evaluation of the primary and secondary channel impulse responses ($h1(\tau)$, $h12(\tau)$, $h13(\tau)$, $h2(\tau)$) comprises a pairwise comparison, according to the order in the first and second sequence, of each second multipath signal component (SC(RF2)k) with its first multipath signal component (SC(RF1)k) corresponding to the order, to determine a temporal deviation ($\Delta k$) for each pair (P1, P2, P3, P4) such that a maximum temporal deviation ($\Delta k$) and a minimum temporal deviation ($\Delta k$) are present,

wherein the degree of similarity (SDS, SDA) is based on at least one of these temporal deviations ($\Delta k$),

wherein the first, second and third radio signals (RF1, RF12, RF13) and the secondary radio signal (RF2) have a common time reference, wherein for each of the degrees of similarity the determination of the distance (d1, d12, d13) according to

$$d = ES - c - SDS$$

where: c is the speed of light, ES = (K + 1)/K is a correction factor and SDS = max{ | $\Delta 1$ | , ..., | $\Delta K$ | } is the degree of similarity with a common time reference, or

wherein the first, second and third radio signals (RF1, RF12, RF13) and the secondary radio signal (RF2) do not have a common time reference, wherein for each of the degrees of similarity the determination of the distance (d1, d12, d13) according to

$$d = EA - c/2 - SDA,$$

where: c the speed of light, EA = (K + 1)/(K - 1) a correction factor, SDA = (max{$\Delta 1$, ..., $\Delta K$} - min {$\Delta 1$, ..., $\Delta K$}) the degree of similarity with no common time reference, K the number of multipath signal components SC(RF1)$_k$, SC(RF2)k, max{$\Delta 1$, ...., $\Delta K$} the maximum temporal deviation from temporal deviations | $\Delta 1$ | , ..., | $\Delta_K$ | and min {$\Delta 1$, ..., $\Delta K$}) the minimum temporal deviation from temporal deviations | $\Delta 1$ | , ..., | $\Delta K$ |.

2. The method according to claim 1, wherein the position of the mobile device (6) is determined by means of a method for trilateration.

3. The method according to any one of the preceding claims, further comprising determining a first identifier of the first mobile electronic device (6) from the second radio signal (RF2), wherein the first identifier is associated with a user profile if the first user (2) is authorized to access.

4. The method according to any one of the preceding claims, wherein the receiving device (14) receives a number of further secondary radio signals emitted by a number of further mobile electronic devices (6), which are assigned to the further users (2), wherein based on each received further secondary radio signal a channel impulse response is determined, which is evaluated in conjunction with the primary channel impulse responses ($h_1(\tau)$, $h_{12}(\tau)$, $h_{13}(\tau)$) to determine distances ($d_1$, $d_2$, $d_3$, $d_4$) of the corresponding further mobile electronic device (6) to the transmitting devices (4, 4.2, 4.3) in order to determine the positions of the other mobile electronic devices (6).

5. The method according to claim 4, further comprising, using the positions of the further mobile electronic devices (6), determining distances between the further users (2).

6. Method according to one of the preceding claims, wherein the radio signals (RF1, RF12, RF13, RF2) have a bandwidth of at least 500 MHz and are transmitted and received according to a WLAN/WiFi standard or a standard for an ultra-wideband technology.

7. System (1) for determining a position of a user (2) in a building, wherein the system (1) comprises:

a control device (10, 11)
transmitting devices (4, 4.2, 4.3) for primary radio signals (RF1, RF12, RF13), in particular a first transmitting device (4) for a first radio signal (RF1), a second transmitting device (4.2) for a second radio signal (RF12), and a third transmitting device (4.3) for a third radio signal (RF13)
a receiving device (14) for radio signals; and
a signal processing device (8) which is communicatively connected to the receiving device (14), wherein the signal processing device (8) is designed,

- to determine primary channel impulse responses ($h_1(\tau)$, $h_{12}(\tau)$, $h_{13}(\tau)$), wherein a first primary channel impulse response ($h_1(\tau)$) is based on the first radio signal (RF1) received by the receiving means (14), wherein a second primary channel impulse response ($h_{12}(\tau)$) is based on the second radio signal (RF12) by the receiving device (14), and wherein a third primary channel impulse response ($h_{13}(\tau)$) is based on the third radio signal (RF13) received by the receiving device (14);
- to determine a secondary channel impulse response ($h_2(\tau)$) based on a secondary radio signal (RF2) received by the receiving device (14), wherein the secondary radio signal (RF2) can be emitted from a first mobile electronic device (6) of a first user (2)
- to determine degrees of similarity ($SD_S$, $SD_A$) by evaluating the channel impulse responses ($h_1(\tau)$, $h_{12}(\tau)$, $h_{13}(\tau)$, $h_2(\tau)$), wherein a first degree of similarity ($SD_S$, $SD_A$) indicates how similar the first primary channel impulse response ($h_1(\tau)$) and the secondary channel impulse response ($h_2$

($\tau$)) are to each other, wherein a second degree of similarity ($SD_S$, $SD_A$) indicates how similar the second primary channel impulse response ($h_{12}(\tau)$) and the secondary channel impulse response ($h_2(\tau)$) are to each other, and a third degree of similarity ($SD_S$, $SD_A$) indicates how similar the third primary channel impulse response ($h_{13}(\tau)$) and the secondary channel impulse response ($h_2(\tau)$) are to each other;
- to determine for each degree of similarity a distance ($d_1$, $d_{12}$, $d_{13}$) of the mobile device (6) to the transmitting device (4, 4.2, 4.3) corresponding to the degree of similarity, which are arranged in the building at predetermined locations; and
- to determine a position of the mobile device (6) based on the distances ($d_1$, $d_{12}$, $d_{13}$);

wherein the signal processing means (8) is further configured to determine from each of the primary channel impulse responses ($h1(\tau)$ $h12(\tau)$, $h13(\tau)$) a first sequence of temporally consecutive first multipath signal components (SC(RF1)k), and to determine from the secondary channel impulse response ($h2(\tau)$) a second sequence of temporally consecutive second multipath signal components (SC(RF2)k);

- wherein the evaluation of the primary and secondary channel impulse responses ($h1(\tau)$, $h12(\tau)$, $h13(\tau)$, $h2(\tau)$) comprises a pairwise comparison, according to the order in the first and second sequence, of each second multipath signal component (SC(RF2)k) with its first multipath signal component (SC(RF1)k) corresponding to the order, to determine a temporal deviation ($\Delta k$) for each pair (P1, P2, P3, P4) such that a maximum temporal deviation ($\Delta k$) and a minimum temporal deviation ($\Delta k$) are present, wherein the degree of similarity (SDS, SDA) is based on at least one of these temporal deviations ($\Delta k$),
- wherein the first, second and third radio signals (RF1, RF12, RF13) and the secondary radio signal (RF2) have a common time reference, wherein for each of the degrees of similarity the determination of the distance (d1, d12, d13) according to

$$d = ES \cdot c \cdot SDS$$

- where: c is the speed of light, ES = (K + 1)/K is a correction factor and SDS = max{ | $\Delta 1$ |, ..., | $\Delta_K$ | } is the degree of similarity with a common time reference; or

- wherein the first, second and third radio signals (RF1, RF12, RF13) and the secondary radio signal (RF2) do not have a common time reference, wherein for each of the degrees of similarity the determination of the distance (d1, d12, d13) according to

$$d = EA - c/2 - SDA,$$

- where: c the speed of light, EA = (K + 1)/(K - 1) a correction factor, SDA = (max{Δ1, ..., ΔK} - min{Δ1, ..., ΔK}) the degree of similarity with no common time reference, K the number of multipath signal components SC(RF1)k, SC(RF2)k, max{Δ1, ..., ΔK} the maximum temporal deviation from temporal deviations | Δ1 | , ..., | ΔK | and min {Δ1, ..., ΔK}) the minimum temporal deviation from temporal deviations | Δ1 |, ..., | ΔK |.

8. System (1) according to claim 7, wherein the signal processing device (8) is designed to determine the position of the mobile device (6) by means of a method for trilateration.

9. System (11) according to one of claims 7 - 8, in which the radio signals (RF1, RF12, RF13, RF2) have a bandwidth of at least 500 MHz and in which the transmitting device (4) and the receiving device (14) are designed according to a WLAN/WiFi standard or a standard for an ultra-wideband technology.

## Revendications

1. Procédé pour faire fonctionner un système de bâtiment (1), le système de bâtiment (1) comprenant un dispositif de commande (10, 11), dispositifs d'émission (4, 4.2, 4.3) pour des signaux radio primaires (RF1, RF12, RF13), en particulier un premier dispositif d'émission (4) pour un premier signal radio (RF1), un deuxième dispositif d'émission (4.2) pour un deuxième signal radio (RF12), un troisième dispositif d'émission (4.3) pour un troisième signal radio (RF13), un dispositif de réception (14) pour des signaux radio et un dispositif de traitement de signal (8) relié de manière communicative au dispositif de réception (14), le procédé comprenant :

déterminer, par le moyen de traitement de signal (8), des réponses impulsionnelles de canal primaire ($h_1$ ($\tau$), $h_{12}$ ($\tau$), $h_{13}$ ($\tau$)), dans lequel une première réponse impulsionnelle de canal primaire ($h_1$ ($\tau$)) est basée sur le premier signal radio (RF1) reçu par le moyen de réception (14), dans lequel une deuxième réponse impulsionnelle de canal primaire ($h_{12}$ ($\tau$)) est basée sur le deuxième signal radio (RF12) reçu par le dispositif de réception (14) et dans lequel une troisième réponse impulsionnelle de canal primaire ($h_{13}$ ($\tau$)) est basée sur le troisième signal radio (RF13) reçu par le dispositif de réception (14) ;
déterminer, par le moyen de traitement de signal (8), une réponse impulsionnelle de canal secondaire ($h_2$ ($\tau$)) basée sur un signal radio secondaire (RF2) reçu par le moyen de réception (14), le signal radio secondaire (RF2) étant émis par un premier dispositif électronique mobile (6) d'un premier utilisateur (2),
déterminer, par le moyen de traitement de signal (8), des degrés de similitude ($SD_S$, $SD_A$) en évaluant les réponses impulsionnelles de canal ($h_1$ ($\tau$), $h_{12}$ ($\tau$), $h_{13}$ ($\tau$), $h_2$ ($\tau$)) , dans lequel un premier degré de similitude ($SD_S$, $SD_A$) indique à quel point la première réponse impulsionnelle de canal primaire ($h_1$ ($\tau$)) et la réponse impulsionnelle de canal secondaire ($h_2$ ($\tau$)) sont similaires entre elles, dans lequel un deuxième degré de similitude ($SD_S$, $SD_A$) indique à quel point la deuxième réponse impulsionnelle de canal primaire ($h_{12}$ ($\tau$)) et la réponse impulsionnelle de canal secondaire ($h_2$ ($\tau$)) sont similaires entre elles, et dans lequel un troisième degré de similitude ($SD_S$, $SD_A$) indique à quel point la troisième réponse impulsionnelle de canal primaire ($h_{13}$ ($\tau$)) et la réponse impulsionnelle de canal secondaire ($h_2$ ($\tau$)) sont similaires entre elles;
déterminer, par le dispositif de traitement de signal (8), pour chaque degré de similitude, une distance ($d_1$, $d_{12}$, $d_{13}$) de l'appareil mobile (6) par rapport au dispositif d'émission (4, 4.2, 4.3) correspondant au degré de similitude, qui sont disposés dans le bâtiment à des endroits déterminés ;
déterminer, par le moyen de traitement de signal (8), une position du dispositif mobile (6) sur la base des distances ($d_1$, $d_{12}$, $d_{13}$);
une première séquence de premières composantes de signal multivoies (SC(RF1)k) se succédant dans le temps étant déterminée à partir de chacune des réponses impulsionnelles de canal primaires (h1($\tau$) h12($\tau$), h13($\tau$)) ;
une deuxième séquence de deuxièmes composantes de signal multivoies (SC(RF2)k) se succédant dans le temps étant déterminée à partir de la réponse impulsionnelle de canal secondaire (h2($\tau$)) ;
l'évaluation des réponses impulsionnelles de canal primaire et secondaire (h1($\tau$), h12($\tau$), h13($\tau$), h2($\tau$)) comprenant une comparaison par paires, selon l'ordre dans la première et la seconde séquence, de chaque seconde composante de signal multivoie (SC(RF2)k) avec sa première composante de signal multivoie (SC(RF1)k) correspondant à l'ordre, pour déterminer pour chaque paire (P1, P2, P3, P4) un écart temporel (Δk) de sorte qu'il existe un écart temporel maximal (Δk) et un écart temporel minimal (Δk), le degré de similitude (SDS, SDA) étant basé sur au moins un de ces écarts temporels (Δk),

dans lequel les premier, deuxième et troisième signaux radio (RF1, RF12, RF13) et le signal radio secondaire (RF2) ont une référence temporelle commune, dans lequel, pour chacun des degrés de similitude, la détermination de la distance (d1, d12, d13) selon

$$d = ES \cdot c \cdot SDS$$

où : c est la vitesse de la lumière, ES = (K + 1)/K un facteur de correction et SDS = max{|Δ1|, ..., |ΔK|} le degré de similitude pour une référence temporelle commune, ou

dans lequel les premier, deuxième et troisième signaux radio (RF1, RF12, RF13) et le signal radio secondaire (RF2) n'ont pas de référence de temps commune, dans lequel, pour chacun des degrés de similitude, la détermination de la distance (d1, d12, d13) selon

$$d = EA \cdot c/2 \cdot SDA,$$

est effectuée, où : c la vitesse de la lumière, EA = (K + 1)/(K - 1) un facteur de correction, SDA = (max{Δ1, ..., ΔK} - min{Δ1, ..., ΔK}) le degré de similitude en l'absence de référence temporelle commune, K le nombre de composantes de signal à trajets multiples SC(RF1)k, SC(RF2)k, max {Δ1, ..., ΔK} le nombre de composantes de signal à trajets multiples SC(RF1)k, SC(RF2)k, max{Δ1, ..., ΔK} le nombre de composantes de signal à trajets multiples...., ΔK} l'écart temporel maximal des écarts temporels |Δ1|, ..., |ΔK| et min{Δ1, ..., ΔK}) l'écart temporel minimal des écarts temporels |Δ1|, ..., |ΔK|.

2. Procédé selon la revendication 1, dans lequel la position du dispositif mobile (6) est déterminée par un procédé de trilatération.

3. Procédé selon l'une quelconque des revendications précédentes, comprenant en outre la détermination d'un premier identifiant du premier dispositif électronique mobile (6) à partir du deuxième signal radio (RF2), le premier identifiant étant associé à un profil d'utilisateur lorsque le premier utilisateur (2) est autorisé à y accéder.

4. Procédé selon l'une des revendications précédentes, dans lequel le dispositif de réception (14) reçoit un certain nombre d'autres signaux radio secondaires émis par un certain nombre d'autres appareils électroniques mobiles (6), les autres utilisateurs (2) sont associés, dans lequel, sur la base de chaque autre signal radio secondaire reçu, on détermine une réponse impulsionnelle de canal qui est évaluée en liaison avec les réponses impulsionnelles de canal primaires ($h_1(\tau)$, $h_{12}(\tau)$, $h_{13}(\tau)$) pour déterminer des distances ($d_1$, $d_2$, $d_3$, $d_4$) de l'autre appareil électronique mobile correspondant (6) aux dispositifs d'émission (4, 4.2, 4.3) pour déterminer à partir de là des positions des autres appareils électroniques mobiles (6).

5. Procédé selon la revendication 4, comprenant en outre, en utilisant les positions des autres appareils électroniques mobiles (6), la détermination des distances entre les autres utilisateurs (2).

6. Procédé selon l'une des revendications précédentes, dans lequel les signaux radio (RF1, RF12, RF13, RF2) ont une largeur de bande d'au moins 500 MHz et sont émis et reçus selon une norme WLAN/WiFi ou une norme pour une technologie à très large bande.

7. Système (1) pour déterminer une position d'un utilisateur (2) dans un bâtiment, le système (1) comprenant :

un dispositif de commande (10, 11)
des dispositifs d'émission (4, 4.2, 4.3) pour des signaux radio primaires (RF1, RF12, RF13), notamment un premier dispositif d'émission (4) pour un premier signal radio (RF1), un deuxième dispositif d'émission (4.2) pour un deuxième signal radio (RF12), et un troisième dispositif d'émission (4.3) pour un troisième signal radio (RF13)
un dispositif de réception (14) pour les signaux radio; et
un dispositif de traitement de signal (8) qui est relié de manière communicative au dispositif de réception (14), le dispositif de traitement de signal (8) étant configuré,

- pour déterminer des réponses d'impulsion de canal primaire ($h_1(\tau)$, $h_{12}(\tau)$, $h_{13}(\tau)$), dans lequel une première réponse d'impulsion de canal primaire ($h_1(\tau)$) est basée sur le premier signal radio (RF1) reçu par le moyen de réception (14), dans lequel une deuxième réponse impulsionnelle de canal primaire ($h_{12}(\tau)$) est basée sur le deuxième signal radio (RF12) reçu par le dispositif de réception (14) et dans lequel une troisième réponse impulsionnelle de canal primaire ($h_{13}(\tau)$) est basée sur le troisième signal radio (RF13) reçu par le dispositif de réception (14);

- pour déterminer une réponse impulsionnelle de canal secondaire ($h_2(\tau)$) sur la base d'un signal radio secondaire (RF2) reçu par le moyen de réception (14), le signal radio secondaire (RF2) pouvant être émis par un premier dispositif électronique mobile (6) d'un premier utilisateur (2)

- pour déterminer des degrés de similitude ($SD_S$, $SD_A$) en évaluant les réponses impulsionnelles de canal ($h_1(\tau)$, $h_{12}(\tau)$, $h_{13}(\tau)$, $h_2(\tau)$), dans lequel un premier degré de similitude ($SD_S$, $SD_A$) indique à quel point la première réponse impulsionnelle de canal primaire ($h_1(\tau)$) et la réponse impulsionnelle de canal secondaire ($h_2(\tau)$) sont similaires entre elles, un deuxième degré de similitude ($SD_S$, $SD_A$) indique à quel point la deuxième réponse impulsionnelle de canal primaire ($h_{12}(\tau)$) et la réponse impulsionnelle de canal secondaire ($h_2(\tau)$) sont similaires entre elles, et dans lequel un troisième degré de similitude ($SD_S$, $SD_A$) indique à quel point la troisième réponse impulsionnelle de canal primaire ($h_{13}(\tau)$) et la réponse impulsionnelle de canal secondaire ($h_2(\tau)$) sont similaires entre elles;

- pour déterminer, pour chaque degré de similitude, une distance ($d_1$, $d_{12}$, $d_{13}$) de l'appareil mobile (6) par rapport au dispositif d'émission (4, 4.2, 4.3) correspondant au degré de similitude, qui sont disposés à des emplacements fixes dans le bâtiment; et

- pour déterminer une position du dispositif mobile (6) sur la base des distances ($d_1$, $d_{12}$, $d_{13}$);

le dispositif de traitement de signal (8) étant en outre conçu pour déterminer, à partir de chacune des réponses impulsionnelles de canal primaire ($h_1(\tau)$ $h_{12}(\tau)$, $h_{13}(\tau)$), une première séquence de premières composantes de signal multivoies (SC(RF1)k) se succédant dans le temps, et pour déterminer, à partir de la réponse impulsionnelle de canal secondaire ($h_2(\tau)$), une seconde séquence de secondes composantes de signal multivoies (SC(RF2)k) se succédant dans le temps ;

- l'évaluation des réponses impulsionnelles de canal primaire et secondaire ($h_1(\tau)$, $h_{12}(\tau)$, $h_{13}(\tau)$, $h_2(\tau)$) comprenant une comparaison par paires, selon l'ordre dans la première et la seconde séquence, de chaque seconde composante de signal multivoie (SC(RF2)k) avec sa première composante de signal multivoie (SC(RF1)k) correspondant à l'ordre, pour déterminer pour chaque paire (P1, P2, P3, P4) un écart temporel ($\Delta k$) de sorte qu'il existe un écart temporel maximal ($\Delta k$) et un écart temporel minimal ($\Delta k$), le degré de similitude (SDS, SDA) étant basé sur au moins un de ces écarts temporels ($\Delta k$),

- dans lequel les premier, deuxième et troisième signaux radio (RF1, RF12, RF13) et le signal radio secondaire (RF2) ont une référence de temps commune, dans lequel, pour chacun des degrés de similitude, la détermination de la distance (d1, d12, d13) selon

$$d = ES - c - SDS$$

- où : c est la vitesse de la lumière, ES = (K + 1)/K un facteur de correction et SDS = max{| $\Delta 1$ | , ..., | $\Delta K$ | } le degré de similitude pour une référence temporelle commune ; ou

- dans lequel les premier, deuxième et troisième signaux radio (RF1, RF12, RF13) et le signal radio secondaire (RF2) n'ont pas de référence de temps commune, dans lequel, pour chacun des degrés de similitude, la détermination de la distance (d1, d12, d13) selon

$$d = EA - c/2 - SDA,$$

- est effectuée, où : c la vitesse de la lumière, EA = (K + 1)/(K - 1) un facteur de correction, SDA = (max{$\Delta 1$, ..., $\Delta K$} - min{$\Delta 1$, ..., $\Delta K$}) le degré de similitude en l'absence de référence temporelle commune, K le nombre de composantes de signaux à trajets multiples SC(RF1)k, SC(RF2)k, max{$\Delta 1$, ..., $\Delta K$} l'écart temporel maximal des écarts temporels | $\Delta 1$ | , ..., | $\Delta K$ | et min{$\Delta 1$, ..., $\Delta K$}) l'écart temporel minimal des écarts temporels | $\Delta 1$ | , ..., | $\Delta K$ |.

8. Système (1) selon la revendication 7, dans lequel le dispositif de traitement de signal (8) est configuré pour déterminer la position du dispositif mobile (6) au moyen d'un procédé de trilatération.

9. Système (11) selon l'une quelconque des revendications 7 à 8, dans lequel les signaux radio (RF1, RF12, RF13, RF2) ont une largeur de bande d'au moins 500 MHz et dans lequel le dispositif d'émission (4) et le dispositif de réception (14) sont configurés conformément à une norme WLAN/WiFi ou à une norme pour une technologie à très large bande.

**Fig. 1**

**Fig. 2**

Fig. 3A

Fig. 3C

Fig. 3B

Fig. 3E

Fig. 3D

Fig. 3F

Start — S1

Bestimme primäre Kanalimpulsantworten $h_1(\tau)$, $h_{12}(\tau)$, $h_{13}(\tau)$ basierend auf Funksignalen RF1, RF12, RF13 — S2

Bestimme sekundäre Kanalimpulsantwort $h_2(\tau)$ basierend auf sekundärem Funksignal RF2 — S3

Bestimme Ähnlichkeitsgrade der Kanalimpulsantworten $h_1(\tau)$, $h_{12}(\tau)$, $h_{13}(\tau)$, $h_2(\tau)$ — S4

Bestimme Distanzen $d_1$, $d_{12}$, $d_{13}$ : mobiles Gerät 6 – Sendeeinrichtungen 4, 4.2, 4.3 — S5

Bestimme Position von mobilem Gerät 6 — S6

Ende — S7

**Fig. 4**

DSP
34
8
DB
38
36
SW
µP
30
32
I/O
40
42

**Fig. 6**

(14,14A)    (11)

Start — S1

Bestimme primäre Kanalimpulsantworten $h_1(\tau)$, $h_{12}(\tau)$, $h_{13}(\tau)$ basierend auf Funksignalen RF1, RF12, RF13 — S2

Bestimme sekundäre Kanalimpulsantwort $h_2(\tau)$ basierend auf sekundärem Funksignal RF2 — S3

Ermittle K Mehrwege-Signalkomponenten von $h_2(\tau)$
Für jede primäre Kanalimpulsantwort $h_1(\tau)$, $h_{12}(\tau)$, $h_{13}(\tau)$:
Ermittle K Mehrwege-Signalkomponenten — S4.1

Für jede primäre Kanalimpulsantwort $h_1(\tau)$, $h_{12}(\tau)$, $h_{13}(\tau)$ :
Vergleiche paarweise K Mehrwege-Signalkomponenten
von $h_1(\tau)$, $h_{12}(\tau)$, $h_{13}(\tau)$ und $h_2(\tau)$
→ zeitliche Abweichung $\Delta_k$ für jedes Paar — S4.2

Für jede primäre Kanalimpulsantwort $h_1(\tau)$, $h_{12}(\tau)$, $h_{13}(\tau)$ :
Bestimme Distanz $(d_1, d_{12}, d_{13}) = E_S \cdot c \cdot \max\{\,|\Delta_1|, ..., |\Delta_K|\,\}$ — S5

Bestimme Position von mobilem Gerät 6 — S6

Ende — S7

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013201873 A1
- WO 2010112586 A1
- WO 2018183571 A1
- US 2010309051 A1
- WO 2016048370 A1

**In der Beschreibung aufgeführte Nicht-Patentliteratur**

- **B. H. FLEURY et al.** Channel parameter estimation in mobile radio environments using the SAGE algorithm. *IEEE Journal on selected areas in communications*, 1999, vol. 17 (3), 434-450
- **T. SANTOS ; J. KAREDAL ; P. ALMERS ; F. TUFVESSON ; A. MOLISCH**. Modeling the ultra wideband outdoor channel: Measurements and parameter extraction method. *IEEE Transactions on Wireless Communications*, 2010, vol. 9 (1), 282-290
- **ILL-KEUN RHEE et al.** Clock Synchronization in Wireless Sensor Network: An Overview. *Sensors*, 2009, vol. 9, 56-85